# EUROPEAN PATENT SPECIFICATION

(11) **EP 1 591 657 B1**
(45) Date of publication and mention of the grant of the patent: **20.11.2019**
(21) Application number: 05009349.1
(22) Date of filing: 28.04.2005
(51) Int. Cl.: F02N 11/08, F02D 41/04, F02D 41/08

(54) **ENGINE STARTING SYSTEM**
STARTSYSTEM FÜR VERBRENNUNGSMOTOR
SYSTÈME DE DÉMARRAGE POUR MOTEUR

(30) Priority: 30.04.2004 JP 2004135368; 30.04.2004 JP 2004135369
(43) Date of publication of application: 02.11.2005
(73) Proprietor: Mazda Motor Corporation, Hiroshima 730-8670 (JP)
(72) Inventor: Tetsuno, Masayuki, Aki-gun Hiroshima 730-8670 (JP); Taga, Jinichi, Aki-gun Hiroshima 730-8670 (JP)
(74) Representative: Thoma, Michael

(56) References cited:
- EP-A2- 1 582 738
- JP-A- 2001 173 473

## Description

### TECHNICAL FIELD

The present invention relates to an engine stopping and starting system, and more particularly to an engine stopping and starting system for automatically stopping an engine in an operating state, such as an idling state when a predetermined automatic engine stop condition is satisfied, and then restarting the automatically stopped engine when a restart condition is satisfied according to the preamble of claim 1, as known from JP 2001-173473 A. EP 1 582 738 A2 discloses also a similar engine stopping and starting system.

### BACKGROUND ART

In late years, as part of measures for reductions in fuel consumption and CO₂ emissions, efforts have been made to develop techniques for automatic engine stop control (so-called "idling stop control") intended to automatically stop an engine in an operating state, such as an idling state, and then automatically restart the engine upon satisfaction of a restart condition, e.g. a driver's action for vehicle start. In the idling stop control, a high response capability is required for the restart process to allow a stopped engine to be quickly started in response to satisfaction of a restart condition, such as a driver's action for vehicle start. Further, a conventional technique commonly used for restarting an engine through a cranking process of driving an engine output shaft using a starter motor can be hardly applied to the above restart process, because the use of the conventional technique involves problems about increase in power consumption and deterioration in durability of the starter motor due to frequent activations of the starter motor.

Thus, it is desirable to use a restart control technique of injecting fuel into a cylinder in the state after being stopped in an expansion stroke, and igniting an obtained air-fuel mixture in the cylinder to induce combustion so as to quickly start the engine by means of the resulting combustion energy. However, if a piston of the cylinder in the state after being stopped in the expansion stroke is stopped at an inadequate position, for example, at a position excessively close to a top dead center or bottom dead center, an air quantity in the cylinder will be significantly reduced to cause difficulties in obtaining sufficient combustion energy or assuring a stroke length for allowing the combustion energy to act on the piston will be excessively shortened. This is likely to preclude the engine from being properly started.

As measures against the above problems, there has been known a technique of controlling a brake mechanism associated with an crankshaft of an engine, in such a manner that a piston of a cylinder to be stopped in an expansion stroke is stopped at an adequate position within the expansion stroke, as disclosed, for example, in Japanese Utility Model Laid-Open Publication No. 60-128975.

There has also been known a technique of selecting a lean air-fuel-ratio injection mode in response to determining the satisfaction of an automatic engine stop condition to provide an increased intake pressure so as to increase a compression pressure in such a manner that a piston of a cylinder to be stopped in an expansion stroke can be stopped at a given position, as disclosed in Japanese Patent Laid-Open Publication No. 2001-173473.

Further, there has been known a technique of increasing an intake-air flow rate for a given period of time in response to determining the satisfaction of an automatic engine stop condition, to facilitate scavenging and adjust an intake-air quantity in such as manner that a piston of a cylinder to be stopped in an expansion stroke can be stopped at a given position, as disclosed in European Patent Laid-Open Publication No. 1403512.

However, an engine starting system disclosed in the Japanese Utility Model Laid-Open Publication No. 60-128975 is essentially required to have the brake mechanism for applying a braking force onto the engine crankshaft in addition to a vehicle brake system as standard equipment. Moreover, while the piston of the cylinder to be stopped in the expansion stroke can be stopped at an adequate position only if the brake mechanism is controlled with a high degree of accuracy, it is practically difficult to achieve such a control.

The technique designed to increase an intake pressure so as to provide an increased compression pressure upon satisfaction of an automatic engine stop condition, as disclosed in the Japanese Patent Laid-Open Publication No. 2001-173473 involves a problem about difficulties in adequately stopping the piston at an adequate position for restart of the engine, because the piston stop position is liable to be varied in conjunction with changes in the level of lowering, or lowering rate, of engine speed.

As compared with the above conventional techniques, the technique disclosed in European Patent Laid-Open Publication No. 1403512, which is designed to stop a piston after ensuring a sufficient intake-air quantity in the cylinder to be stopped in an expansion stroke, can provide enhanced stability in movement of the piston during the course of being stopped, so that the piston is more likely to be stopped at a given position even if the lowering rate of engine speed is changed to some extent. In addition, the control of temporarily increasing an intake-air flow rate facilitates scavenging to allow a sufficient quantity of fresh intake air to be ensured even when the engine is started shortly after stop of the engine.

However, even in the technique disclosed in the European Patent Laid-Open Publication No. 1403512, it is difficult to avoid variation in the piston stop position due to individual difference in intake system and other engine components, and changes in volumetric flow rate of intake air caused by fluctuation in operation conditions, such as engine temperature. Therefore, there remains the need for a technique capable of suppressing variation in piston stop position to further reliably stop a piston at an adequate position for facilitating engine starting.

In view of the above circumstances, it is an object of the present invention to provide an engine starting system capable of stopping a piston at an adequate position in an automatic engine stop control with enhanced reliability and in a simplified structure to achieve an enhanced engine restart performance.

### SUMMARY OF INVENTION

In order to achieve the above object, according to the present invention, there is provided an engine stopping and starting system for automatically stopping and starting an engine of a vehicle according to claim 1.

In the engine starting system of the present invention, the automatic stop control means may be operable to set an engine speed at a value greater than a normal idling speed in conjunction with executing the interruption of the fuel injection from the fuel injection valves to automatically stop the engine. In this case, the automatic stop control means may be operable to set the target output current of the alternator at the initial value when an engine speed detected by the engine speed detecting means after the interruption of the fuel injection is greater than the normal idling speed, and determine a decrement from the initial value of the target output current after an engine speed detected by the engine speed detecting means becomes equal to or less than the normal idling speed.

In the engine starting system of the present invention, the automatic stop control means may be operable, after a piston of any one of the cylinders passes through the top dead center in the second compression stroke to the last compression stroke in the cylinders just before the engine is stopped, to allow the fuel injection valve for the cylinder which reaches a subsequent compression stroke, to execute the fuel injection in the last half of the subsequent compression stroke.

In the engine starting system of the present invention, the automatic stop control means may be operable to set a fuel injection amount to be injected from the fuel injection valve in the last half of the subsequent compression stroke, in accordance with an engine speed at a bottom dead center detected by the rotational speed detecting means at the time when the piston of any one of the cylinders passes through the top dead center in the second compression stroke to the last compression stroke in the cylinders just before the engine is stopped, wherein the fuel injection amount is set at a larger value as the detected engine speed has a larger value.

In the engine starting system of the present invention, the engine includes an intake-air flow-rate adjusting means for adjusting an intake-air flow rate to be supplied to each of the cylinders, and the vehicle may include an automatic transmission. In this case, the automatic stop control means may be operable, upon satisfaction of the automatic stop condition, to switch an operation state of the automatic transmission from a drive state to a neutral state, and allow the intake-air flow-rate adjusting means to increase the intake-air flow rate to be supplied to each of the cylinders up to a value greater than that in an engine operating state at the normal idling speed, whereafter the automatic stop control means may be operable, when an engine speed is increased up to a value greater than the normal idling speed, to interrupt the fuel injection from the fuel injection valves and set the initial value as the target output current.

In the engine starting system of the present invention, the automatic stop control means is operable, during the period of the automatic engine stop control after the interruption of the fuel injection, to determine a decrement from the initial value of the target output current in accordance with an engine speed detected by the rotational speed detecting means at a time when an engine crank angle becomes equal to a predetermined detection angle, wherein the decrement is set at a larger value when the detected engine speed has a smaller value.

### BRIEF DESCRIPTION OF DRAWINGS

FIG. 1 is a partial sectional schematic diagram of an engine having an engine stopping and starting system according to one embodiment of the present invention.
FIG 2 is an explanatory diagram showing the structure of an intake system and an exhaust system of the engine.
FIGS. 3(a) and 3(b) are explanatory diagrams showing the relationship between a piston stop position and an air quantity in each of two cylinders to be, respectively, in an expansion stroke and a compression stroke when the engine is stopped.
FIG. 4 is a time chart showing changes in engine speed during an automatic engine stop control.
FIG. 5 is a time chart showing changes in throttle opening and target output current of an alternator during the automatic engine stop control.
FIG. 6 is a distribution chart showing the correlation between an engine speed and a piston stop position during the automatic engine stop control.
FIG. 7 is a distribution chart showing the correlation between a BDC engine speed in the second compression stroke to the last compression stroke in the cylinders just before the engine is stopped, and a piston stop position in the cylinder which is in an expansion stroke after the engine is stopped.
FIG. 8 is a flowchart showing the initial stage of the process of the automatic engine stop control.
FIG. 9 is a flowchart showing the middle stage of the process of the automatic engine stop control.
FIG. 10 is a flowchart showing the last stage of the process of the automatic engine stop control.
FIG. 11 is a graph showing one example of a map for use in setting a target output current of the alternator according to an engine speed.
FIG. 12 is a flowchart showing the initial stage of the process of an engine restart control.
FIG. 13 is a flowchart showing the middle stage of the process of the engine restart control.
FIG. 14 is a flowchart showing the last stage of the process of the engine restart control.
FIG. 15 is a time chart showing a combustion cycle during the engine restart control.
FIG. 16 is a time chart showing changes in engine speed and other parameters during the engine restart control.
FIG. 17 is a time chart showing changes in output current of the alternator.

### DETAILED DESCRIPTION OF THE INVENTION:

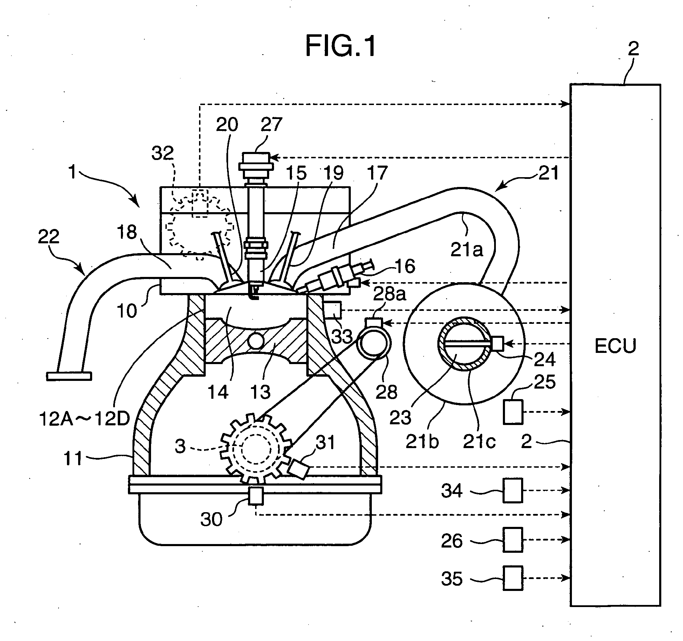

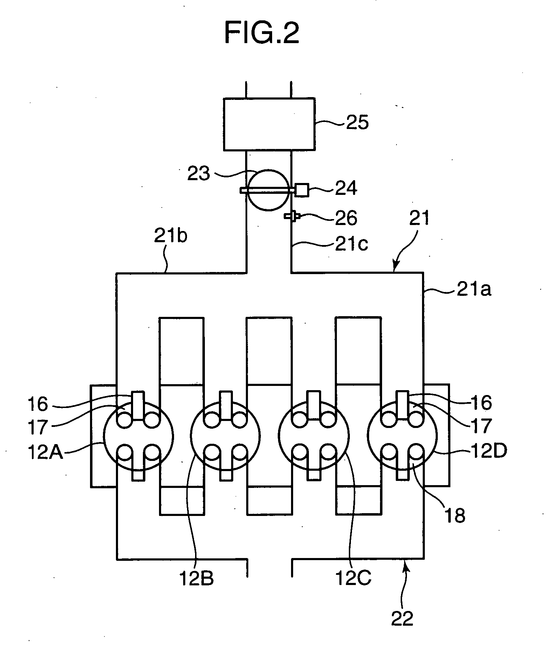

FIGS. 1 and 2 schematically show the structure of a four-stroke spark-ignition internal combustion engine having an engine starting system according to one embodiment of the present invention. This engine comprises an engine body 1 including a cylinder head 10 and a cylinder block 11, and an engine control ECU (electronic control unit) 2. The engine body 1 has four cylinders 12A to 12D, and a piston 13 connected to a crankshaft 3 is slidably fitted in each of the cylinders 12A to 12D to define a combustion chamber 14 thereabove.

The combustion chambers 14 in each of the cylinders 12A to 12D has a top wall portion provided with a spark plug 15 whose tip is exposed to the combustion chamber 14. Each of the spark plugs 15 is electrically connected to an ignition device 27 for activating the corresponding spark plug 15 to generate an electric spark therein.

Further, a fuel injection valve 16 is attached to a side wall portion (right side in FIG. 1) of the combustion chamber 14 in each of the cylinders 12A to 12D to inject fuel directly into the combustion chamber 14. This fuel injection valve 16 is designed to be driven and opened for a period of time corresponding to a pulse width of a pulse signal entered therein from the ECU 2 so as to inject fuel in an amount proportional to the valve open period, toward and around electrodes of the spark plug 15.

The combustion chamber 14 in each of the cylinders 12A to 12D also has an upper wall portion formed with two intake ports 17 and two exhaust ports 18 each extending to open into the combustion chambers 14. Each of the intake ports 17 is equipped with an intake valve 19, and each of the exhaust ports 18 is equipped with an exhaust valve 20. The intake valve 19 and the exhaust valve 20 are designed to be driven by a valve operating mechanism including camshafts (not shown), so that respective opening/closing timings of the intake and exhaust valves 19, 20 in the cylinders 12A to 12D are set to allow a four-stroke combustion cycle to be performed in the cylinders 12A to 12D with a given phase differences therebetween.

The intake ports 17 and the exhaust ports 18 are connected with an intake passage 21 and an exhaust passage 22, respectively. As shown in FIG. 2, a downstream portion of the intake passage 21 on the side closer to the intake ports 17 is formed as an intake manifold with four independent passages 21a corresponding to the cylinders 12A to 12D, and respective upstream ends of the intake manifold passages 21a are in fluid communication with a surge tank 21b. An upstream portion of the intake passage 21 relative to the surge tank 21b is formed as a common intake passage 21c which is provided with a throttle valve 23 (serving as intake-air flow-rate adjusting means) designed to be driven by an actuator 24. Further, an air-flow sensor 25 for detecting an intake-air flow rate and an intake pressure sensor 26 for detecting an intake pressure (negative pressure) are disposed, respectively, on the upstream and downstream sides of the throttle valve 23.

An alternator (power generator) 28 is attached to the engine body 1 and connected to the crankshaft 3 through a timing belt or the like. This alternator 28 is internally provided with a regulator circuit 28a for controlling a current to be applied to a field coil (not shown) thereof to regulate an output voltage so as to adjust a target output current. Specifically, the alternator 28 is designed to be controlled according to a control signal sent from the ECU 2 to the regulator circuit 28a so as to produce a target output current in proportion, for example, to an electric load of a vehicle and a voltage of a battery mounted on the vehicle, when the engine is in a normal operating state.

The engine is provided with a pair of first and second crank angle sensors 30, 31 (serving as rotational speed detecting means, and having a function of a rotational speed sensor) for detecting a rotational angle of the crankshaft 3. The first crank angle sensor 30 is operable to generate a detection signal for use in detecting an engine speed. Further, the first and second crank angle sensors 30, 31 are arranged to generate detection signals with a phase lag, and these detection signals are used to detect a rotational direction and a rotational angle of the crankshaft 3, as described later in more detail.

Further, the engine starting system is associated with a cam angle sensor 32 for detecting a specific rotational position of the camshaft to discriminate the cylinders from each other, a coolant temperature sensor 33 for detecting an engine coolant temperature, an accelerator-pedal angle sensor 34 for detecting an accelerator-pedal angle corresponding to a displacement of an accelerator pedal caused by a driver's operation, and a brake sensor 35 for detecting a driver's brake operation. All of the detection signals from the above sensors are sent to the ECU 2.

In response to receiving the detection signals from the sensors 25, 26, 30 to 34, the ECU 2 is operable to output a control signal for controlling a fuel injection amount and a fuel injection timing to each fuel injection valve 16, a control signal for controlling an ignition timing to each of the ignition devices 27 associated with the corresponding spark plugs 15, and a control signal for controlling a throttle opening to the actuator 24 of the throttle valve 23. Further, the ECU 2 is operable to execute an automatic engine stop control for interrupting the fuel injection (cut fuel) to the cylinders 12A to 12D at a given timing after a predetermined automatic engine stop condition is satisfied, to automatically stop the engine, and then execute an automatic engine restart control for automatically restarting the engine in response to satisfaction of a restart condition, e.g. a driver's accelerator-pedal operation, as described later in more detail.

That is, the ECU 2 functionally has fuel injection control means for controlling a fuel injection amount and a fuel injection timing in each of the fuel injection valves 16, and ignition control means for controlling an ignition timing in each of the spark plugs 15. Furthermore, the ECU 2 functionally has an automatic stop control section (automatic stop control means) for, upon satisfaction of a predetermined automatic engine stop condition, controlling the fuel injection valves 16 to interrupt the fuel injection for maintaining an operating state of the engine to automatically stop the engine, and an automatic start control section (automatic start control means) for, upon satisfaction of a restart condition for restarting the automatically stopped engine, allowing the fuel injection valve 16 of at least the cylinder (any one of the cylinder 12A-12D) in the state of being automatically stopped in an expansion stroke to inject fuel into the cylinder, and allowing the spark plug 15 of the cylinder to ignite the resulting air-fuel mixture and induce combustion in the cylinder so as to automatically restart the engine.

Specifically, the automatic start control means executes the automatic engine restart control as follows. Firstly, initial combustion is induced in the cylinder whose piston 13 is stopped in a compression stroke range after the completion of the automatic engine stop control (the cylinder in a compression stroke will hereinafter be referred to, generally, as "compression-stroke cylinder") to move the piston 13 of the compression-stroke cylinder downward so as to reversely rotate the crankshaft 3. In conjunction with this process, the piston 13 of the cylinder which is stopped in an expansion stroke range after completion of the automatic engine stop control (the cylinder in an expansion stroke will hereinafter be referred to, generally, as "expansion-stroke cylinder") is moved upward to compress an air-fuel mixture in the expansion-stroke cylinder. In this state, the air-fuel mixture is ignited and burnt to give a driving torque in a normal rotational direction to the crankshaft 3 so as to restart the engine.

In order to adequately restart the engine only by igniting a fuel injected into a specific one of cylinders fundamentally without using a starter motor or the like, it is required to reliably obtain sufficient combustion energy from combustion of the air-fuel mixture in the expansion-stroke cylinder so as to allow the piston of another cylinder which will reach a top dead center in a compression stroke (hereinafter referred to as "compression TDC") subsequently to the piston of the expansion-stroke cylinder, to pass through the compression TDC against a compressive reaction force therein. Thus, a sufficient quantity of air should be ensured in the expansion-stroke cylinder whose piston is in an expansion-stroke range after completion of the automatic engine stop control.

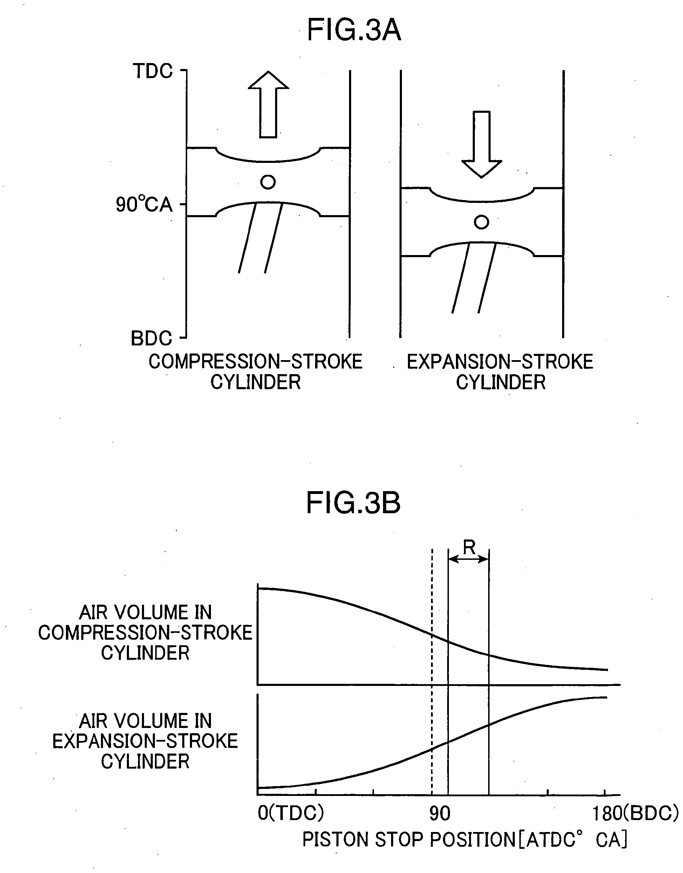

As shown in FIGS. 3(a) and 3(b), the respective pistons 13 of the compression-stroke and expansion-stroke cylinders are moved in opposite directions because these cylinders are out of phase by 180°CA. If the piston 13 of the expansion-stroke cylinder is located on the side of a bottom dead center (BDC) relative to a stroke midpoint, the expansion-stroke cylinder can have a larger air quantity to obtain sufficient combustion energy. However, if the piston 13 of the expansion-stroke cylinder is located at a position excessively close to the BDC, an air quantity in the compression-stroke cylinder will be excessively reduced to cause difficulties in sufficiently obtaining combustion energy for reversely rotating the crankshaft 3.

In contrast, if the piston 13 of the expansion-stroke cylinder 12 can be stopped at a position falling within a given adequate range R slightly on the side of BDC from the midpoint of the expansion stroke (crank angle after compression TDC = 90°CA), for example, a range of 100°CA to 120°CA , a given quantity of air will be ensured in the compression-stroke cylinder to allow the initial combustion to produce combustion energy to the extent capable of rotating the crankshaft 3 reversely and slightly. In addition, the expansion-stroke cylinder will have a larger quantity of air, so that combustion energy for normally rotating the crank shaft 3 can be sufficiently produced to reliably restart the engine.

Further, if an adequate load can be quickly imposed on the engine during the engine stop control by means of the output control of the alternator 28, or if the output of the alternator 28 can be controlled quickly in response to lowering rate in engine speed in a specific engine speed range where the level of the load to be imposed on the engine can be determined by the level of the output of the alternator 28, the pistons 13 will be able to be more reliably stopped in the adequate range.

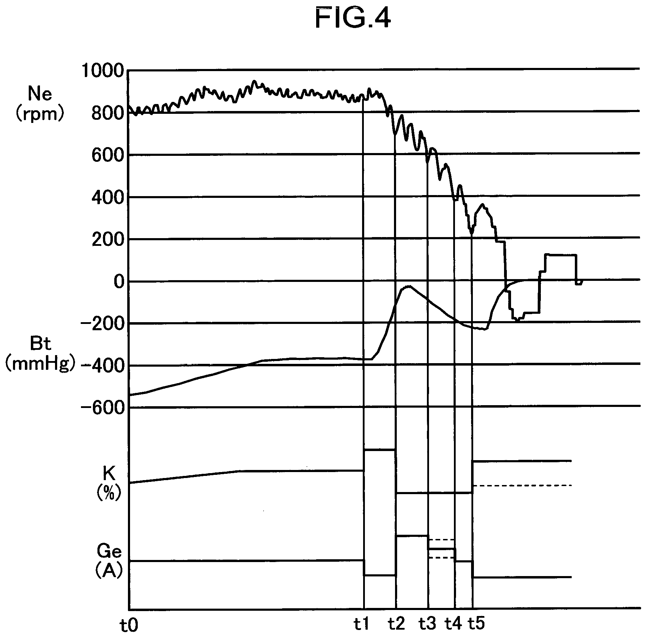

Considering the above points, as shown in FIG. 4, the automatic stop control means in the ECU 2 is designed to execute the following control. At Time t0 when the automatic engine stop condition is satisfied, a target engine speed is set at a value greater than a normal idling engine speed in engine operations without the automatic engine stop control, to stabilize an engine speed Ne at a value slightly greater than the normal idling engine speed. For example, if the engine has a normal idling engine speed of 650 rpm (when an automatic transmission is operated in a drive state), a target engine speed is set at about 810 rpm (when an automatic transmission is operated in a neutral state). More specifically, at Time t0 when the automatic engine stop condition is satisfied, an operation state of an automatic transmission is changed from a drive state to a neutral state (while keeping a shift range in a drive range) to reduce an external load (load of the automatic transmission) imposed on the engine, and an opening K of the throttle valve 23 is increased, for example, in such a manner that an intake-air quantity supplied into the cylinders becomes greater than that in a normal idling operation under the condition that an in-cylinder air-fuel ratio is set at λ = 1 (a minimum intake-air quantity required for maintaining an engine operation), to increase the engine speed Ne up to a value slightly greater than the normal idling speed.

Then, at Time t1 after the engine speed Ne becomes stabile at the target engine speed, the fuel injection is interrupted to lower the engine speed Ne. Even after the interruption of the fuel injection, the activation of the spark plugs are maintained at least for a period of time allowing the fuel which has been already injected into the cylinders to be fully burnt.

Further, in the initial stage of the automatic engine stop control just after Time t1 when the fuel injection is interrupted, the opening K of the throttle valve 23 is further increased. Specifically, just before Time t1, the engine is operated in homogeneous combustion by use of an in-cylinder air-fuel ratio set at λ = 1 or about 1. Thus, at Time t1 when the fuel injection is interrupted, the opening K of the throttle valve 23 is further increased (for example, up to 30 % of a full throttle opening) in such a manner that an intake-air quantity to be supplied into the cylinder 12A to 12D is set at a value greater than a minimum intake-air quantity required for maintaining an engine operation, by a given amount, so as to ensure a scavenging performance. Simultaneously, at Time t1 when the fuel injection is interrupted, a target output current Ge of the alternator 28 is set at a value less than that at Time t0 when the automatic engine stop condition is satisfied, to reduce a rotational friction of the crankshaft 3.

The engine speed Ne will be gradually lowered after the fuel injection is interrupted at Time t1. Then, at Time t2 when it is determined that the engine speed Ne is lowered to a predetermined reference speed, for example, 760 rpm or less, the throttle valve 23 is closed. Consequently, after Time t2 when the throttle valve 23 is closed, the boost pressure (intake passage pressure or intake pressure) Bt starts declining to reduce an intake-air quantity to be supplied to each cylinder of the engine. An air sucked into the common intake passage 21c during the period between Time t1 and Time t2 when the throttle valve 23 is closed, is introduced through the surge tank 21b and the intake manifold passages 21a to the cylinder #4 or 12D, the cylinder #2 or 12B, the cylinder #1 or 12A and the cylinder # 3 or 12C which reach an intake stroke in this order, with a given transport delay therebetween. Thus, in consideration with the transport delay of the intake air, Time t2 when the throttle valve 23 is closed can be set to allow the cylinder #1 or 12A which will be in an expansion stroke after stop of the engine, to be supplied with a greater quantity of air as compared to the cylinder #3 or 12C which will be in a compression stroke when the engine is stopped.

At Time t2 when it is determined that the engine speed Ne is lowered to the reference speed N2, the target output current Ge of the alternator 28 is temporarily increased up to a large value. Then, at Time t3 when an engine speed at a top dead center (TDC engine speed) ne falls within a given range, the target output current Ge of the alternator 28 is adjusted depending on the lowering rate of the engine speed Ne to allow the engine speed Ne to be controllably lowered along a reference curve based on the result of an experimental test performed in advance, as described later in more detail.

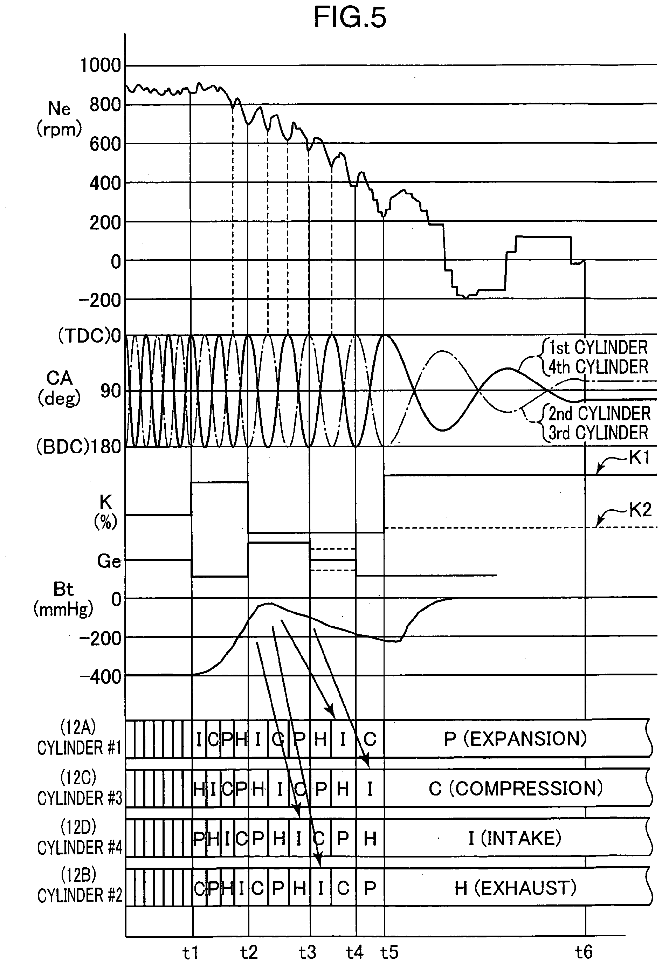

During the course of the above engine stop control, after Time t1 when the fuel injection is interrupted, kinetic energy having the crankshaft 3, a flywheel and others is consumed by mechanical loss due to frictional resistance and pumping loss in the cylinders 12A-12D, and the crankshaft 3 of the engine is rotated several times by an inertia force. For example, a 4-cylinder 4-stroke engine is stopped after having a compression TDC about 10 times. Specifically, as shown in FIGS. 4 and 5, the engine speed Ne is lowered with repeated rise-fall cycles in which the engine speed Ne temporarily falls every time each piston of the cylinders 12A-12D reaches a compression TDC, and re-rises at a time when the piston passes through the compression TDC.

In the time chart of a crank angle CA illustrated in , the solid line indicates a crank angle obtained on the condition that TDCs of the cylinders #1 and #3 or 12A and 12C are 0 (zero)°CA, and the one-dot chain line indicates a crank angle obtained on the condition that TDCs of the cylinders #2 and #4 or 12B and 12D are 0 (zero)°CA. In a 4-cylinder 4-stroke engine, there is a phase difference of 180°CA between the cylinder 12A or 12D indicated by the solid line and the cylinder 12B or 12C indicated by the one-dot chain line. That is, this time chart shows that any of the pistons of the cylinders reaches a compression TDC 4 every 180°CA.

Then, in the cylinder 12C whose piston will reach a compression TDC after Time t5 when the piston of the cylinder 12A passes through the last compression TDC just before stop of the engine, the piston 13 of the cylinder 12C is pushed back due to a compressive reactive force from an in-cylinder air pressure increased in conjunction with the upward movement of the piston 13 caused by the inertia force, and the crankshaft 3 is reversely rotated. This reverse rotation of the crankshaft 3 increases the air pressure in the expansion-stroke cylinder 12A. Then, due to the resulting compressive reaction force, the piston 13 of the expansion-stroke cylinder 12A is pushed back toward a BDC, and thereby the crankshaft starts normally rotating again. These normal and reverse rotations of the crankshaft 3 are repeated several times to cause reciprocating motion of the pistons 13, and then the pistons 13 are finally stopped. Each stop position of the pistons 13 is almost determined by the balance between the respective compressive reaction forces in the compression-stroke cylinder 12C and the expansion-stroke cylinder 12A. Further, the piston stop positions are affected by a frictional resistance of the engine, and varied depending on a rotational inertia force of the engine or the level of the engine speed Ne at Time t5 when the piston of the cylinder 12A passes through the last compression TDC.

Thus, in order to stop the piston 13 of the expansion-stroke cylinder 12a at a position falling within the adequate stop range R for restart of the engine after the completion of the automatic engine stop control, it is required to adjust respective intake-air quantities for the expansion-stroke and compression-stroke cylinders 12A, 12C so as to allow respective compressive reaction forces in the expansion-stroke and compression-stroke cylinders 12A, 12C to have a sufficiently high value, and allow the compressive reaction force in the expansion-stroke cylinder 12A to be greater than that in the compression-stroke cylinder 12C by a given value or more. For this purpose, in this embodiment, at Time t1 when the fuel injection is interrupted, an opening K of the throttle valve 23 is set at a larger value to supply a given quantity of air to each of the expansion-stroke and compression-stroke cylinders 12A, 12C. Then, at Time t2 when a given time lapses from Time t1, the throttle valve 23 is closed, or the opening K is reduced, to adjust the intake-air quantities.

However, even in the same model of engines, they actually have an individual difference, for example, in the shape of the throttle valve 23, the intake ports 17 and the inlet manifold passages 21a, and thereby the behavior of air flowing therethrough will be changed. This causes fluctuation in intake-air quantity to be supplied into each of the cylinders 12A to 12d during the automatic engine stop control. Moreover, the individual difference between the engines and changes in engine temperature also lead to difference in frictional resistance between the engines. Thus, even if the opening of the throttle valve 23 is controlled in the above manner, these variations are likely to cause difficulties in allowing each piston of the expansion-stroke cylinder 12A and the compression-stroke cylinder 12C at the time of stop of the engine to be stopped at a position falling within the adequate range R.

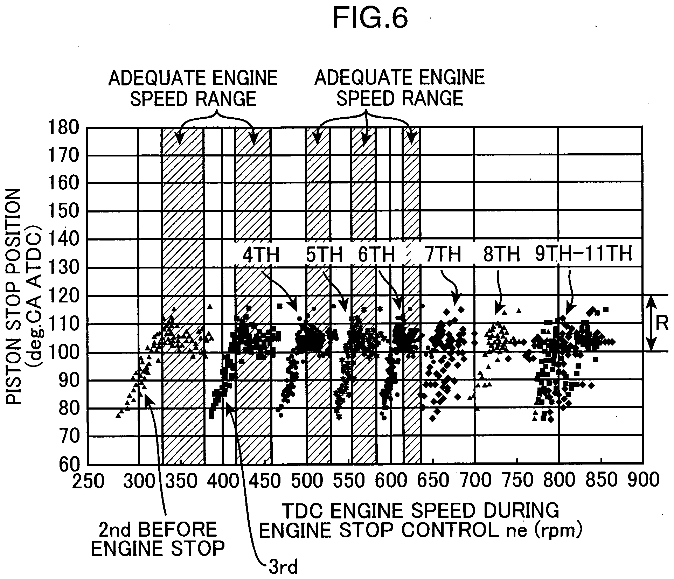

As to this problem, the present disclosure focuses on the fact that, during the process of lowering in the engine speed Ne according to the above automatic engine stop control, there is a specific correlation between an engine speed ne at a time when each piston of the cylinders 12A to 12D passes through a compression TDC (TDC engine speed) and a piston stop position in the expansion-stroke cylinder 12A at the time of stop of the engine, as seen from one example illustrated in FIG. 6. Based on this fact, as shown in FIGS. 4 and 5, during the process of lowering in the engine speed Ne after Time 1 when the fuel injection is interrupted, an engine speed at the time when each piston 13 of the cylinders 12A to 12D passes through a compression TDC, or a TDC engine speed ne, is detected, and the target output current Ge of the alternator 28 is controlled in accordance with the detection value of the TDC engine speed ne to adjust the lowering rate of the engine speed Ne.

FIG. 6 graphically shows the relationship between a TDC engine speed ne and a piston stop position, wherein the vertical and horizontal axes represent the piston stop position and the TDC engine speed ne, respectively. The TDC engine speed ne is measured at a time when each piston 13 of the cylinders 12A to 12D of the engine driven by an inertia force under the conditions that the fuel injection is interrupted at Time t1 when the engine speed Ne is increased up to a given value, and the throttle valve 23 is opened for a given period of time from Time t1, as mentioned above. The piston stop position is measured from the expansion-stroke cylinder 12A at the time of stop of the engine. These measurements can be repeated to obtain a distribution chart indicating the correlation between the TDC engine speed ne and the piston stop position in the expansion-stroke cylinder 12A, during the process of the automatic engine stop control.

Based on the distribution chart, the correlation between the TDC engine speed ne and the piston stop position in the expansion-stroke cylinder 12A, during the process of the automatic engine stop control, can be found. In an example illustrated in FIG. 6, it can be found that, if each of the sixth to second TDC engine speeds to the last TDC engine speed just before stop of the engine falls within a range indicated by hatched lines, the measured stop positions of the above piston 13 fall within the adequate range for restart of the engine (100 to 120°CA after a compression TDC).

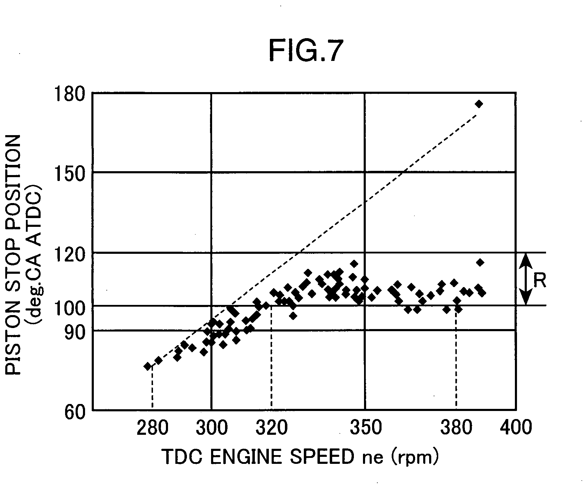

Particularly in the second TDC engine speed ne to the last TDC engine speed just before stop of the engine, as shown in FIG. 7, the TDC engine speed ne is in the range of about 280 to 380 rpm, and the measured piston stop positions gradually come closer to TDC as the TDC engine speed ne is lowered, in a range where the TDC engine speed ne has a relatively low value of about 320 rpm or less. In contrast, as seen in FIG. 7, in a range where the TDC engine speed ne has a relatively high value of greater than 320 rpm, irrespective of the value of the TDC engine speed ne, the measured piston stop positions of the piston 13 become approximately constant, and fall substantially within the adequate range R.

The reason for the above characteristic distribution pattern would be that, when the TDC engine speed ne has a relatively high value of greater than 320 rpm, a sufficient quantity of air is supplied to the expansion-stroke and compression-stroke cylinders 12A, 12B at the time of stop of the engine, and the piston stop positions are concentrated on the stroke midpoint by a compressive reaction force from the air. On the other hand, the reason why the measured piston stop positions at a relatively low engine speed of 320 rpm or less have a distribution pattern sloping down to the left would be that the pistons 13 reciprocating in the respective cylinders 12A to 12D are decelerated due to frictional resistance and other factors after turning around on the side of a compression TDC, and stopped without returning to the stroke midpoint.

In the above automatic engine stop control, if the throttle valve 23 is kept in a closed state without the open operation after the interruption of the fuel injection, the measured piston stop positions will have a distribution pattern linearly sloping down to the right as indicated by the broken line in FIG. 7, or the piston stop position is varied depending on the value of the TDC engine speed ne. The reason is that, if the throttle valve 23 is kept in the closed state, a high intake pressure (high negative pressure) is maintained, and thereby compressive reaction forces in the expansion-stroke and compression-stroke cylinders 12A, 12D after the initiation of the automatic engine stop control are lowered. Consequently, this leads to increase in influence of the engine speed Ne (rotational inertia) and the frictional resistance.

Thus, in this embodiment, as shown in FIGS. 4 and 5, in order to suppress the influence of the engine speed Ne (rotational inertia) and the frictional resistance, and ensure a sufficient scavenging performance in the cylinders 12A to 12D, for a given period of time from Time t1 when the fuel injection is interrupted, or until Time t2 when the engine speed Ne is lowered to the reference engine speed (e.g. about 760 rpm), the opening K of the throttle valve 23 is desirably set at a relatively large value (e.g. 30% of a full throttle opening). Further, in order to maintain the engine speed Ne at a value allowing the piston 13 to be controllably stopped at the adequate position, the target output current Ge of the alternator 28 is desirably reduced, for example, set at 0 (zero) at Time t1 when the fuel injection is interrupted.

Then, at Time t2 when the engine speed Ne is lowered to the reference engine speed N2 or less, the opening K of the throttle valve 23 is reduced, and the target output Ge of the alternator 28 is set at (increased to) the predetermined initial value, as described above. Subsequently, at Time t3 when TDC engine speed ne is lowered to a given range, the target output Ge of the alternator 28 is reduced to a value corresponding to the lowering rate of the engine speed Ne. More specifically, the lowering rate of the engine speed Ne can be accurately determined by measuring the TDC engine speed ne at Time t3, and thereby a decrement from the initial value of the target output current Ge of the alternator 28 can be determined based on the TDC engine speed ne at Time t3 to adjust the rotational resistance of the crankshaft 3, or the external engine load can be changed depending on the lowering rate of the engine speed Ne, so as to lower the engine speed Ne along a reference curve, for example, determined by an experimental test performed in advance.

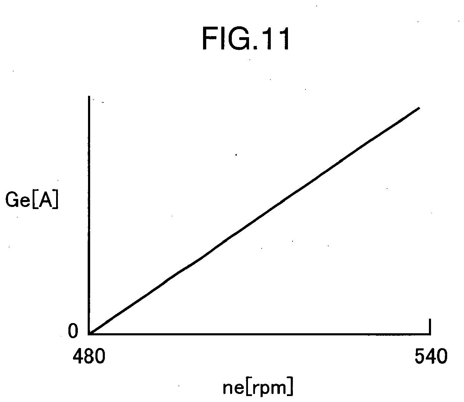

Specifically, the TDC engine speed is detected during the course of lowering of the engine speed Ne along the reference curve. If it is determined that the TDC engine speed ne is in a given range, for example, of 480 to 540 rpm (the TDC engine speed ne is lowered by a given value allowing a lowering rate of the engine speed Ne to be detected relatively accurately, and the engine speed Ne has a given value allowing the alternator 28 to achieve a sufficient power generation performance, a decrement from the initial value of the target output current Ge depending on the lowering rate of the engine speed Ne will be determined at Time t3 in accordance with the TDC engine speed ne at Time t3 when it is detected that any of the pistons pass through all of the fourth to sixth compression TDCs to the last compression TDC just before stop of the engine is detected. More specifically, a value of target output current Ge corresponding to the TDC engine speed ne at Time t3 is read from a map illustrated in FIG. 11 where the value of target output current Ge is predetermined such that it is increased as the TDC engine speed has a larger value (wherein a maximum value of target output current Ge is set to be less than the initial value), and the read value is set as the target output current Ge of the alternator 28.

In this manner, before the engine speed Ne is lowered to a given value or less, or before the engine speed Ne is lowered to be less than a given rotational speed value (e.g. 420 rpm) allowing the alternator 28 to achieve a sufficient power generation performance, the alternator 28 is activated to allow a control for adjusting the lowering rate of the engine speed Ne to be executed.

In the automatic engine stop control which is executed in a 4-stroke engine wherein adjacent identical strokes occur between the cylinders with a phase difference of 180°CA, Time t3 when the above optimal TDC engine speed ne can be obtained corresponds to a time when any of the pistons of the cylinders reaches any of the forth to sixth compression TDC to the last compression TDC just before stop of the engine. This has been experimentally verified.

In the control of the target output current Ge of the alternator 28, the initial value for increasing the target output current Ge of the alternator 28 at Time t2 when the engine speed Ne is lowered to a value equal to or less than the reference engine speed N2 is predetermined at a value greater than the maximum value of the target output current Ge to be read from the map, and this target output current Ge increased up to the initial value at Time t2 is reduced at Time t3 in accordance with a detection value of the TDC engine speed ne. For example, if the target output current Ge to be read from the map is predetermined in the range of zero to 50 A, the initial value will be set at a value, e.g. 60 A, which is greater than the maximum value of 50 A in the range. In this case, the target output current Ge is set at 60 A at Time t2. Then, at Time t3, a decrement from this target output current Ge is determined based on a preset value read from the map, and the target output current Ge of the alternator 28 is reduced based on the determined decrement.

According to the execution of the above control for the output current of the alternator, kinetic energy of moving engine components, such as the crankshaft 3, a flywheel, the pistons 13 and connecting rods, and potential energy of compressed air in the compression-stroke cylinder 12, at Time t5 when the piston of the cylinder 12A passes through the last compression TDC, can be adjusted at an appropriate value relative to losses, such as frictional resistance loss, occurring in the subsequent process. This allows the piston of the cylinder 12 A to be in an expansion stroke after stop of the engine to be stopped at a position falling within the adequate range R for restart of the engine.

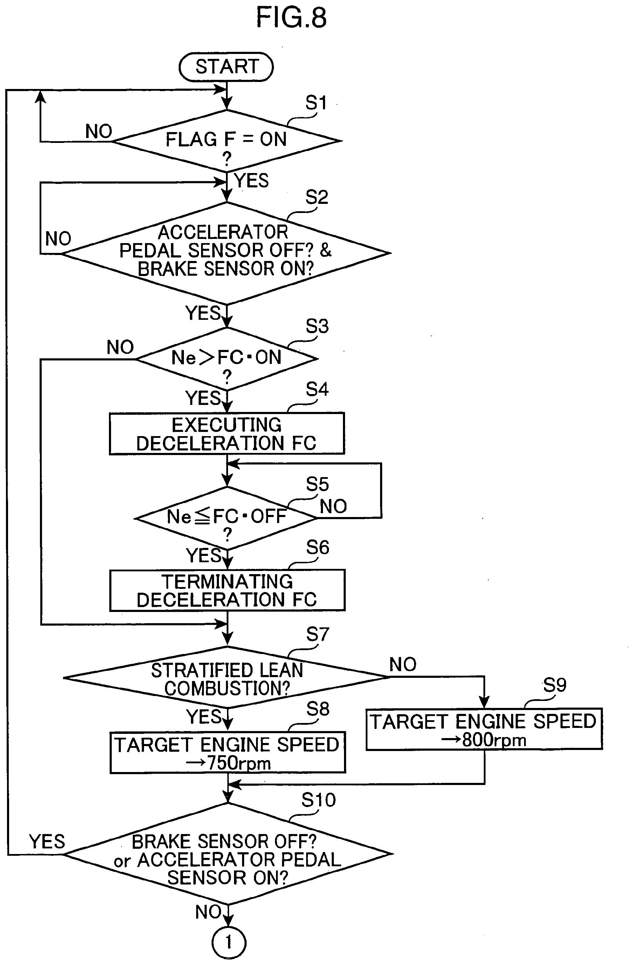

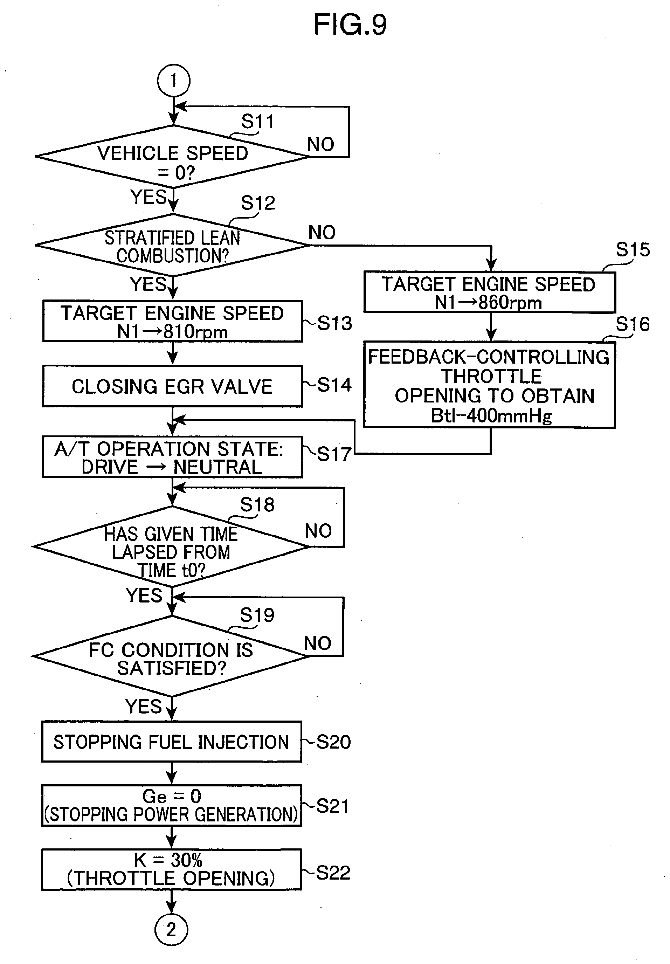

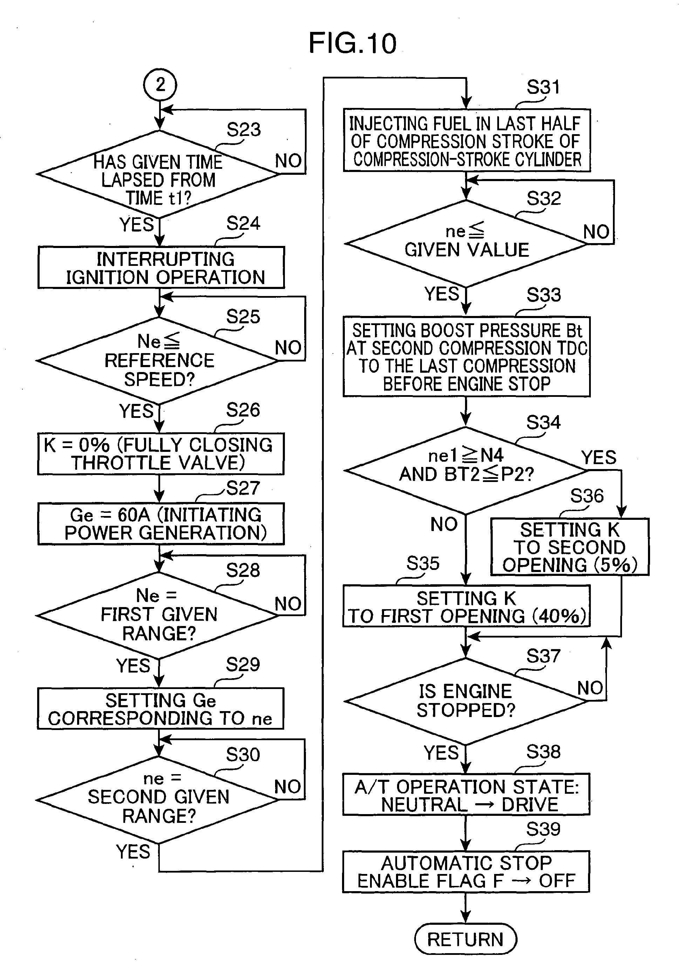

With reference to flowcharts illustrated in FIGS. 8 to 10, the process of the automatic engine stop control based on the automatic stop control means in the ECU will be described below. Upon starting this control process, it is determined whether an automatic stop enable flag F is ON (Step S1). This automatic stop enable flag F indicates whether the engine is in an allowable operating state for the automatic engine stop control. More specifically, if a predetermined condition, such as a given value (e.g. 10 km/h) or more of vehicle speed, a given value or less of steering angle, a reference value or more of battery voltage and/or an OFF state of air conditioner, is satisfied, it will be determined that the engine is in the allowable operating state for the automatic engine stop control, and then the automatic stop enable flag F will be set to ON.

If the determination in Step S1 is YES, it will be determined whether the accelerator pedal sensor 34 is in an OFF state, and the brake sensor 35 is in an ON state (Step S2). If the determination in Step S2 is YES or it is determined that the vehicle is in a deceleration state, it will be determined whether the engine speed Ne is greater than a criterion value for cutting fuel during deceleration (deceleration fuel-cut criterion value) F/C · ON predetermined at about 1100 rpm (Step S3). If the determination in Step S3 is NO, the process will skip to Step S7.

If the determination in Step S3 is YES or it is determined that the engine speed Ne is greater than the deceleration fuel-cut criterion value, the deceleration fuel-cut control will be executed (Step S4). Then, it is determined whether the engine speed Ne is lowered to a value equal to or less than a criterion value for resuming the fuel injection (fuel-resume criterion value) F/C · OFF predetermined at about 900 rpm (Step S3). In response to the determination of YES in Step S3, the deceleration fuel-cut control (FC) is terminated to return to a normal fuel injection control (Step S6).

Then, it is determined whether the engine is operated in a lean combustion where an air-fuel ratio in the cylinders 12A to 12D is set at a value fairly greater than a theoretical air-fuel ratio, i.e. in a stratified lean combustion (Step S7). If the determination in Step S7 is YES, the target engine speed will be set at a value, e.g. 750 rpm, greater than the normal idling speed (about 650 rpm) by a given value, and this setup speed will be maintained (Step S8). If the determination in Step S7 is NO or it is determined that the engine is operated in a homogeneous combustion where the air-fuel ratio in the cylinders 12A to 12D is set at a value equal or close to the theoretical air-fuel ratio, the target engine speed will be set at a value, e.g. about 800 rpm, greater than the value set in Step S8, or 750 rpm, and this setup speed will be maintained (Step S9).

Then, it is determined whether the accelerator pedal sensor 34 is in an ON state, and the brake sensor 35 is in an OFF state, or whether the deceleration state is released (Step S10). If the determination in Step S10 is YES, the process will returns to Step S1, and the above process will be repeated. If the determination in Step S10 is NO, or it is determined that the deceleration state is not released, it will be determined whether a vehicle speed is zero, or whether the vehicle is in a stopped state, and the automatic engine stop condition is satisfied (Step S11).

If the determination in Step S11 is YES, or it is determined that the vehicle is in the stopped state, it will be determined whether the engine is operated in a lean combustion where an air-fuel ratio in the cylinders 12A to 12D at current Time t0 is set at a value fairly greater than a theoretical air-fuel ratio, i.e. in a stratified lean combustion (Step S12). If the determination in Step S12 is YES, or it is determined that the engine is operated in the stratified lean combustion, the target engine speed N1 will be set at a value, e.g. 810 rpm, greater than the normal idling speed (about 650 rpm) by a given value (Step S13). Further, in order to provide an enhanced scavenging performance in the cylinder 12A to 12D, an EGR valve (not shown) interposed in an EGR passage will be closed to stop an exhaust gas recirculation control (Step 14).

If the determination in Step S12 is NO or it is determined that the engine is not operated in the stratified lean combustion, the following process will be executed. For example, in order to facilitate reduction in catalyst temperature or refreshment of NOx catalyst, when it is determined that the engine is operated in a homogeneous combustion where the air-fuel ratio in the cylinders is set at a value equal or close to the theoretical air-fuel ratio, the target engine speed N1 will be set at a value, e.g. about 860 rpm, greater than the value set in Step S13, or 810 rpm (Step S15). Further, and the opening K of the throttle valve 23 is feedback-controlled in such a manner that the throttle valve 23 is operated to open the throttle valve 23 to allow the boost pressure Bt to be equal to a target pressure P1 predetermined, for example, at about - 400 mmHg (Step S16), and the operation state of the automatic transmission is changed from the drive state to the neutral state or no-load state (Step S17).

As above, in this process, when it is determined that the vehicle is driven at a vehicle speed of 10 km/h or more, and the automatic engine stop enable flag F is ON, in Step S1, and it is further determined that the vehicle is in a deceleration state (the brake sensor is in the ON state) in Step S2, the target engine speed N1 is set at a given value corresponding to a combustion mode of the engine to stabilize the engine speed. Thus, the automatic engine stop control can be executed before the engine speed Ne is lowered to the normal idling speed (650 rpm). This makes it possible to prevent problems in control of increasing the engine speed Ne up to the target engine speed N1 after the engine speed Ne is lowered to the normal idling speed, for example, poor driving feel caused by increase in the engine speed Ne during idling or undesirably extended period of time required for automatically stopping the engine.

Further, in this process, the target engine speed N1 is set at a lower value in the stratified lean combustion mode capable of introducing a larger quantity of air into the cylinders 12A to 12D, and ensuring a sufficient scavenging performance in the cylinders 12A to 12D, as compared to the homogeneous combustion mode where a smaller quantity of air is introduced into the cylinders 12A to 12D, and it is difficult to ensure a sufficient scavenging performance in the cylinders 12A to 12D. This has advantages of being able to ensure a scavenging performance by means of the stratified lean combustion mode, and prevent deterioration in fuel consumption and occurrence of uncomfortable combustion noises, due to undesirably increased engine speed Ne.

Furthermore, in this process, the target engine speed N1 is set at a given value in Step S13 or S15, at Time t0 when it is determined that the vehicle speed is zero and the automatic engine stop condition is satisfied, in Step S11. In addition, the operation state of the automatic transmission is changed from the drive state to the neutral state in Step S17 to reduce the load of the automatic transmission. Thus, as shown in FIG. 4, the engine speed Ne is increased from that at Time t0 when the automatic engine stop condition is satisfied.

Then, after Time t0 when the determination in Step S11 is made as YES and the satisfaction of the automatic engine stop condition is determined, it is determined whether a given time predetermined at about 1 sec passes (Step S18). If the determination in Step S18 is NO, this determination process will be repeated. Then, when the determination is made as YES, it is determined whether the condition of interrupting the fuel injection (FC condition) is satisfied. Specifically, it is determined whether the engine speed Ne is equal to the target engine speed N1, and the boost pressure Bt is stabilized at the target pressure P1 (Step S19). During this determination step, if the accelerator pedal sensor 34 is changed to the OFF state, or the brake sensor 35 is changed to the ON state, the process will return without interrupting the fuel injection. This makes it possible to prevent the automatic engine stop control from being undesirably executed, for example, when the vehicle is changed to a driving state just after the vehicle speed becomes zero.

At the time (Time t1 in FIGS. 4 and 5) when the determination in Step S19 is made as YES, and the stabilization of the engine speed Ne and the boost Bt is determined, the fuel injection is interrupted (Step S20). Then, the target output current of the alternator Ge is set at 0 (zero) to stop power generation (Step S21), and the throttle valve 23 is opened in such a manner as to set the opening K, for example, at 30 % (Step S22).

Then, it is determined whether a given time lapses from Time t1 when the fuel injection is stopped in Step S20, or whether any two of the pistons of the cylinders pass through a compression TDC after the interruption of the fuel injection, and the combustion of previously injected fuel is completed (Step S23), and then the ignition operation of the ignition device 27 is interrupted at a time when the determination in Step S23 is made as YES (Step S24). Then, it is determined whether the engine speed Ne is equal to or less than a reference speed N2 predetermined at about 760 rpm (Step S25), so as to determine whether the engine speed Ne starts being lowered after Time t1 when the fuel injection is interrupted as shown in FIG. 4. Then, at Time t2 when the determination in Step S25 is made as YES, the throttle valve 23 is closed to set the opening K at 0 (zero) % (Step S26). Thus, in response to the closing operation of the throttle valve 23, the boost pressure Bt increased to come close to atmosphere pressure by opening the throttle valve 23 in Step S22 will start being reduced with a given time lag.

Further, a power generation control for setting the predetermined initial value of about 60 A as the target output current Ge of the alternator 28 to activate the alternator 28 is initiated (Step S27). This embodiment is designed such that the throttle valve 23 is closed at Time t2 when it is determined that the engine speed Ne is equal to or less than the reference speed N2, in Step S25. Alternatively, it may be designed such that, at a time when it is determined that the TDC engine speed ne is equal to or less than a reference speed N2 predetermined, for example, at about 760 rpm, the throttle valve 23 is closed, and the power generation control of the alternator is initiated.

Then, it is determined whether the TDC engine speed ne is in a first given range (Step S28). This first given range is a value determined, for example, based on the TDC engine speed ne at Time t3 when any one of the poisons of the cylinders passes through the fourth compression TDC to the last compression TDC just before stop of the engine, during the process where the engine speed Ne is being lowered along the predetermined reference curve. Specifically, the first given range may be set in the range of 480 to 540 rpm.

If the determination in Step 28 is YES or it is determined that the TDC engine speed ne is in the range of the first given range (from 480 to 540 rpm), the target output current Ge of the alternator 28 will be set at a value corresponding to the TDC engine speed ne at Time t3 (Step S29). Specifically, a value of target output current Ge corresponding to the above TDC engine speed ne is read from the map where the value of target output current Ge is predetermined such that it is increased as the TDC engine speed has a larger value, as shown in FIG. 11, and the target output current Ge of the alternator 28 is reduced to the value read from the map.

Then, it is determined whether the TDC engine speed ne is in a second given range, for example, from 260 to 400 rpm, which is determined based on the TDC engine speed at Time t4 when the piston of any one of the cylinders passes through the second compression TDC to the last compression TDC just before stop of the engine (Step S30). At Time t4 when the determination in Step S30 is made as YES or it is determined that the piston of any one of the cylinders passes through the second compression TDC to the last compression TDC just before stop of the engine, a fuel injection amount for the cylinder 2C to be in a compression stroke after stop of the engine is determined based on a map (not shown) where the fuel injection amount is arranged such that it is increased as the TDC engine speed has a larger value, and the fuel injection is executed in the last half of the compression stroke in this cylinder 12C (Step S31). An in-cylinder temperature of the cylinder 12C will be reduced by the fuel injected thereinto to suppress increase in in-cylinder pressure therein.

Then, it is determined whether the TDC engine speed ne is equal to or less than a given value N3 (Step S32). This given value N3 corresponds to the TDC engine speed ne at a time when the piston of any one of the cylinders passes through the last compression TDC during the process where the engine speed Ne is being lowered along the predetermined reference curve. For example, the given value N3 is predetermined at about 260 rpm. Concurrently, the boost pressure Bt at each time when the pistons of the cylinders 12A to 12C sequentially pass through compression TDCs is detected, and the detected value is stored.

If the determination in Step S32 is YES or it is determined that the TDC engine speed ne is equal to or less than the given value N3 or that the piston of any one of the cylinders passes through the last compression TDC, the boost pressure Bt at Time t5 will be read out, and the read value will be set as the boost pressure Bt at the second compression TDC to the last compression TDC just before stop of the engine (Step S33).

Then, based on the TDC engine speed ne at Time t5 when the engine has the last compression TDC (this TDC engine speed ne will hereinafter be referred to as "last TDC engine speed ne1"), and the boost pressure Bt at the second compression TDC to the last compression TDC just before stop of the engine (this boost pressure will hereinafter be referred to as "boost pressure Bt2"), it is determined whether each of the pistons 13 is likely to be stopped at a position on the side of the last phase of each stroke (as to the expansion-stroke cylinder, a position on the side of the BDC) (Step S34). Specifically, when the last TDC engine speed ne1 is equal to or greater than a given rotational speed N4 (of, for example, 200 rpm), the boost pressure Bt2 is equal to or less than a given pressure P2 (of, for example, - 200 mmHg) (is a vacuum pressure), each of the pistons is highly likely to be stopped on the side of the last phase of each stroke, or the piston stop position in the expansion-stroke cylinder 12A is highly likely to be located close to 120°CA in the adequate range R of 100 to 120°CA after the compression TDC, and the determination in Step S34 is made as YES.

The determination of NO in Step S34 means that each of the pistons is less likely to be stopped on the side of the last phase of each stroke, and highly likely to be stopped relatively on the side of the initial phase of each stroke. That is, the piston stop position in the expansion-stroke cylinder 12A is likely to be located close to 100°CA or at 100°CA or less, in the adequate range R of 100 to 120°CA after the compression TDC. Thus, the throttle valve 23 is opened to allow the pistons 13 to be more reliably stopped at a position falling within the adequate range R. For example, the throttle valve 23 is controlled in such a manner that the opening K of the throttle valve 23 is set at a predetermined first opening K1 of about 40 % of the full throttle opening (Step S35), to increase the intake-air flow rate so as to reduce an intake resistance in the cylinder in an intake stroke (intake-stroke cylinder) 12D. This helps the pistons be stopped at a position on the side of the last phase of each stroke, and thereby can prevent the piston stop position in the expansion-stroke cylinder 12A from moving beyond the lower limit (100°CA) of the adequate range R.

The determination of YES in Step S34 means that a rotational inertia force of the engine is relatively large, and the compression-stroke cylinder 12C has a low intake-air flow rate in the last intake stroke thereof or a small compressive reaction force. That is, the conditions of allowing each of the pistons to be readily stopped at a position on the side of the last phase of each stroke are satisfied. Thus, the throttle valve 23 is opened, for example, in such a manner that the opening K of the throttle valve 23 is set at a predetermined second opening K2 of about 5 % of the full throttle opening (Step S36). The second opening K2 may be set to a smaller value or a fully closed state according to engine characteristics. In this manner, an appropriate intake resistance is generated in the intake-stroke cylinder 12D to effectively prevent each piston stop position of the pistons 13 from moving beyond the adequate range R or into the last phase of each stroke.

Then, it is determined whether the engine is stopped (Step S37). When the determination in Step S37 is made as YES, the operation state of the automatic transmission is resumed from the neutral state to the drive state (Step S38), and the automatic stop enable flag F is set to OFF to complete the control process.

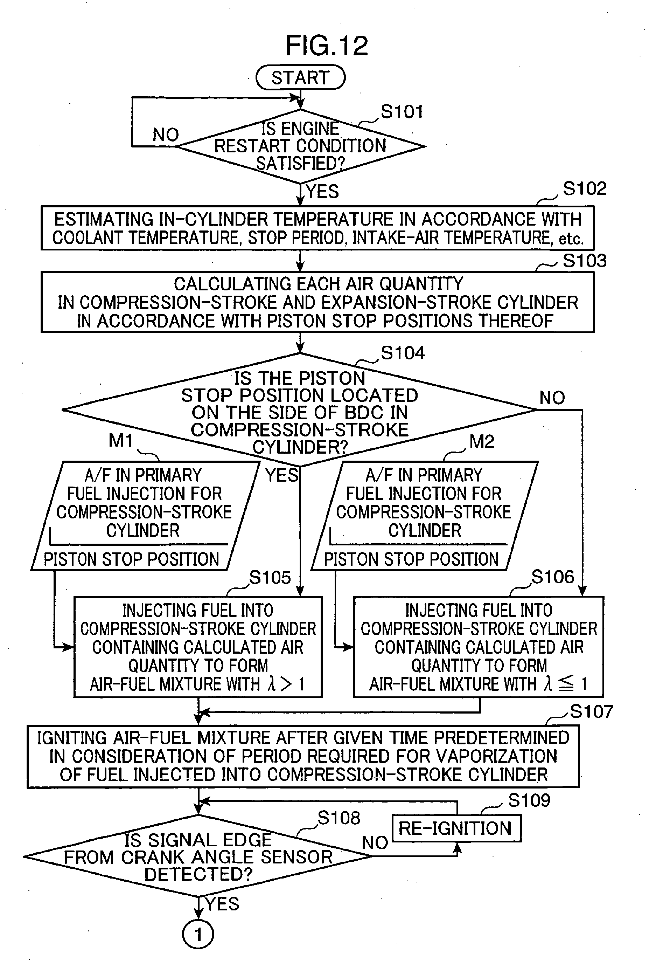

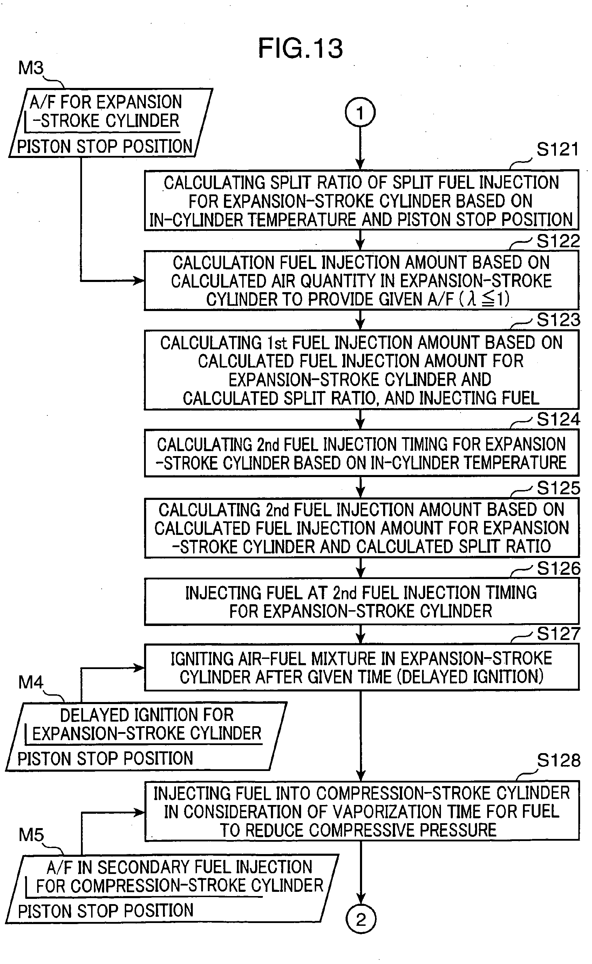

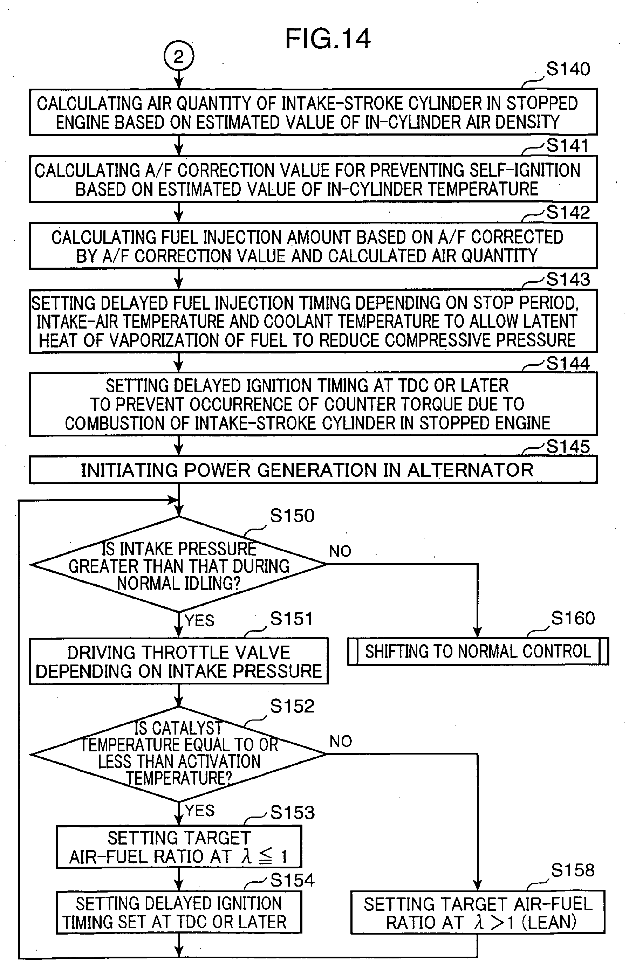

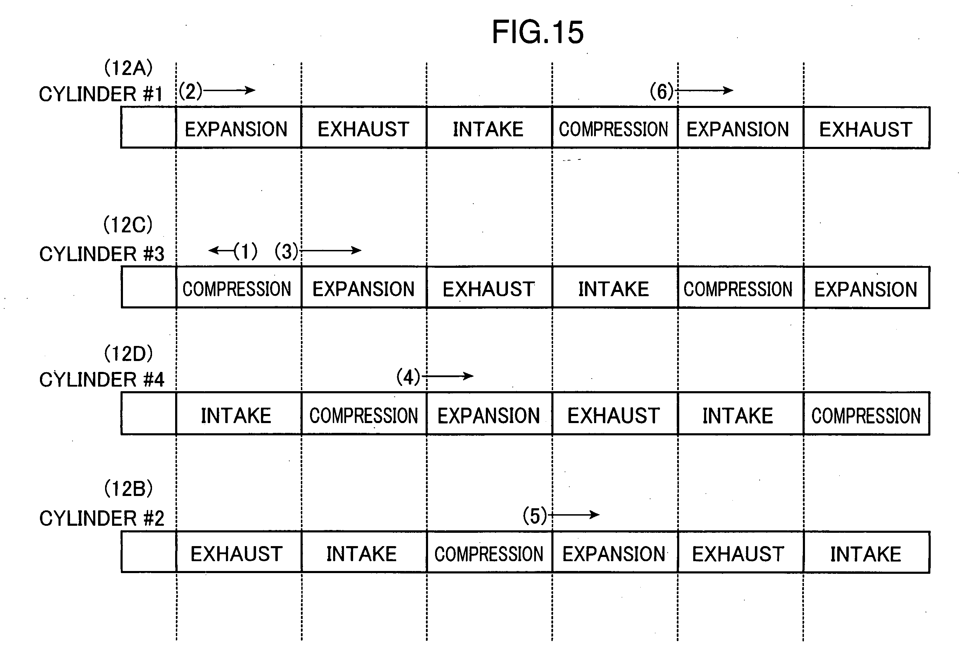

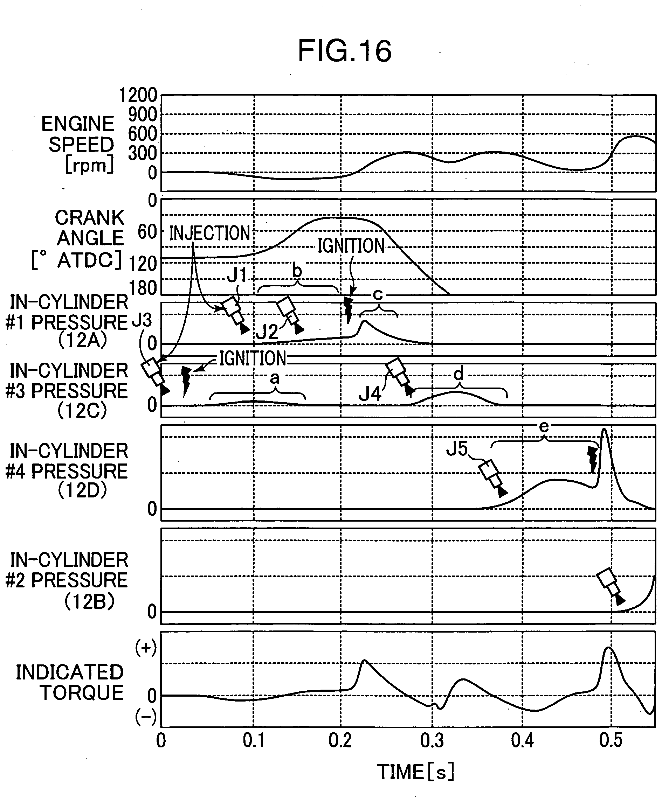

With reference to flowcharts illustrated in FIGS. 12 to 14, and time charts illustrated in FIGS. 15 and 16, the process of the engine restart control for restarting the engine automatically stopped in the above way will be described below.

Firstly, it is determined whether a given engine restart condition is satisfied (Step S101). When the determination in Step S101 is made as YES in response to detection, for example, of the operation of an accelerator pedal for starting moving a stopped vehicle, the lowering of a battery voltage or the activation of an air conditioner, an in-cylinder temperature is estimated based on an engine coolant temperature, a lapsed time from completion of the automatic engine stop control, an intake temperature, etc. (Step S102).

Then, based on respective stop positions of the pistons 13 detected in the process of the automatic engine stop control, an air quantity in each of the compression-stroke cylinder 12C and the expansion-stroke cylinder 12A is calculated (Step S103). Specifically, a combustion chamber volume in each of the compression-stroke and expansion-stroke cylinders 12C, 12A can be calculated from the stop position of the corresponding piston 13, and a flesh air quantity can be derived from the calculated combustion chamber volume, because the engine has several combustion cycles in the period from the interruption of the fuel injection to the engine stop to allow the cylinders including the expansion-stroke cylinder 12A to be filled with a flesh air, and an in-cylinder pressure in each of the compression-stroke and expansion-stroke cylinders 12C, 12A becomes approximately equal to atmosphere pressure after the engine stop.

Then, it is determined whether the piston stop position detected based on output signals of the crank angle sensors 30, 31 is located on the side of the bottom dead center (BDC) within the adequate stop range (of 60 to 80°CA before TDC or BTDC 60 to 80°CA) in the compression-stroke cylinder 12C (Step S104). If the determination in Step S104 is YES, and it is determined that the compression-stroke cylinder 12C contains a relatively large air quantity, a primary fuel injection will be performed for the compression-stroke cylinder 12C containing the air quantity calculated in Step 103, to form therein an air-fuel mixture with an air-fuel ratio having an excess air ratio λ > 1 (e.g. air-fuel ratio: about 20) (Step S105). This air-fuel ratio is determined using a first air-fuel ratio map M1 for the primary fuel injection, and set at a lean air-fuel ratio or λ > 1. This prevents combustion energy from being excessively produced even if the compression-stroke cylinder 12C contains a relatively large air quantity.

If the determination in Step S104 is NO, and the compression-stroke cylinder contains a relatively low air quantity, the primary fuel injection will be performed for the compression-stroke cylinder containing the air quantity calculated in Step 103, to form therein an air-fuel mixture with an air-fuel ratio having λ = 1 (Step S106). This air-fuel ratio is determined using a second air-fuel ratio map M2 for the primary fuel injection, and set at λ = 1 (theoretical air-fuel ratio or air-fuel ratio richer than that). This makes it possible to obtain sufficient combustion energy for reverse rotation of the crankshaft even if the compression-stroke cylinder 12C contains a relatively low air quantity.

Then, after the lapse of a given time predetermined in consideration of a period of time required for vaporization of the fuel injected into the compression-stroke cylinder 2C through the primary fuel injection, the obtained air-fuel mixture in the cylinder 12C is ignited (Step S107). Subsequently, it is determined whether the pistons 13 are moved, based on whether at least one edge, i.e. rising or falling edge, of detection signals from the crank angle sensors 30, 31 within a given time after the ignition (Step S108). If the determination in Step S108 is NO or it is determined that the pistons 13 are not moved, an additional ignition will be performed for the compression-stroke cylinder 12C (Step S109).

When the determination in Step S108 is made as YES or it is determined that the pistons 13 are moved, a split ratio (or the ratio between a first initial injection and a second last injection) in a split fuel injection for the expansion-stroke cylinder 12A is calculated based on and the in-cylinder temperature estimated in Step S102 and the piston stop position (Step S121). The percentage of the last injection is set at a larger value as the piston stop position in the expansion-stroke cylinder 12A is located closer to BDC, and the in-cylinder temperature is higher.

Then, based on the air quantity in the expansion-stroke cylinder 12A calculated in Step S103, a total fuel injection amount is calculated to form an air-fuel mixture with a given air-fuel ratio (λ = 1) (Step S122). This total air-fuel ratio is determined using an air-fuel ratio map M3 for the expansion-stroke cylinder 12A, predetermined with respect to each stop position of the piston 13. Further, an initial (first) fuel injection amount for the expansion-stroke cylinder 12A is calculated based on the total fuel injection amount calculated in Step S122 and the split ratio calculated in Step S121, and the calculated amount of fuel is injected (Step S123).

Then, a last (second) fuel injection timing for the expansion-stroke cylinder 12A is calculated based on the in-cylinder temperature estimated in Step S102 (Step S124). This second injection timing is set to be in a period where the in-cylinder air is being compressed after the piston 13 starts moving toward the TDC (reverse rotation of the engine crankshaft), so as allow latent heat of vaporization of the injected fuel to effectively reduce a compression pressure, or allow the piston 13 to be moved toward the TDC. The second injection timing is also set to maximize a period of time for allowing the fuel in the second injection to be vaporized before an ignition timing therefor.

Then, a last (second) fuel injection amount for the expansion-stroke cylinder 12A is calculated based on the total fuel injection amount for the expansion-stroke cylinder 12A calculated in Step S122 and the split ratio calculated in Step S121 (Step S125), and this second fuel injection is executed at the second injection timing calculated in Step S124 (Step 126).

After the second fuel injection to the expansion-stroke cylinder 12A, the obtained air-fuel mixture is ignited with a given delay time (Step S127). This delay time is determined using an ignition map M4 for the expansion-stroke cylinder 12A, predetermined with respect to each stop position of the piston 13. According to first combustion induced in the expansion-stroke cylinder by the above ignition, the rotational direction of the engine crankshaft is changed from reverse to normal. Thus, the piston 13 of the compression-stroke cylinder 12C is moved toward the TDC to start compressing in-cylinder gas (burnt gas through the combustion induced by the ignition in Step S107).

Then, in consideration of a period of time required for vaporization of fuel, a secondary fuel injection is performed for the compression-stroke cylinder 12C (Step S128). The amount of fuel in the secondary fuel injection is determined to allow a total air-fuel ratio based the sum of respective fuel injection amounts in the primary and secondary fuel injections to be richer (e.g. about 6) than a combustible air-fuel ratio (lower limit: 7 to 8), by use of an air-fuel ratio map M5 for the secondary fuel injection, predetermined with respect to each stop position of the piston 13. According to latent heat of vaporization of the fuel injected by the secondary fuel injection for the compression-stroke cylinder 12C, a compression pressure around the compression TDC in the compression-stroke cylinder 12C can be reduced to allow the piston 13 to readily pass through this compression TDC.

The secondary fuel injection to the compression-stroke cylinder 12C is intended only to reduce the in-cylinder compression pressure. That is, no ignition for inducing combustion is executed, and the obtained air-fuel mixture richer than a combustible air-fuel ratio causes no self-ignition. The resulting unburnt fuel will be purified through the reaction with oxygen stored in the exhaust gas purification catalyst in the exhaust passage 22.

As above, the fuel injected by the secondary fuel injection for the compression-stroke cylinder 12C is not burnt. Thus, as shown in FIG. 16, combustion subsequent to the first combustion in the expansion-stroke cylinder 12A will firstly occur in the intake-stroke cylinder 12D or the cylinder #4 in the state after being stopped in an intake stroke. Energy of the first combustion in the expansion-stroke cylinder 12A is partly used as energy required for the piston 13 of the intake-stroke cylinder 12D to pass through a compression TDC. That is, the energy of the first combustion in the expansion-stroke cylinder 12A is used as both energy required for the piston 13 of the compression-stroke cylinder 12C to pass through the compression TDC and energy required for the piston 13 of the intake-stroke cylinder 12D to pass through a compression TDC.

Thus, in view of smooth starting, it is desirable to minimize the energy required for the piston 13 of the intake-stroke cylinder 12D to pass through a compression TDC. For this purpose, an air density in the intake-stroke cylinder 12D is estimated to calculate an air quantity therein in accordance with the estimated value (Step S140). Then, based on the in-cylinder temperature estimated in Step S102, an air-fuel ratio correction value for preventing self-ignition is calculated (Step S141). Specifically, the occurrence of self-ignition leads to combustion generating an undesirable force (counter torque) of pushing back the piston 13 toward a BDC before reaching a compression TDC to cause additional consumption of the energy for passing through the compression TDC. Thus, the air-fuel ratio is corrected to a leaner value to prevent the occurrence of self-ignition.

Then, based on the air quantity in the intake-stroke cylinder 12D calculated in Step S140, and an air-fuel ratio corrected by the air-fuel ratio correction value calculated in Step S141, a fuel injection amount for the intake-stroke cylinder 12D is calculated (Step S142). Then, the calculated amount of fuel is injected into the intake-stroke cylinder 12D. This fuel injection is executed at a delayed timing set in the last phase of a compression stroke to allow latent heat of vaporization of the fuel to effectively reduce a compression pressure or the energy require for passing through the compression TDC (Step S143), and the delay time is calculated based on the lapsed time after completion of the automatic engine stop control (automatic stop period of the engine), the intake temperature, the engine coolant temperature, etc.

Further, the obtained air-fuel mixture is ignited at a delayed timing set at the TDC or later to prevent the occurrence of counter torque (Step S144). According to the above control, when the piston is moved up to the compression TDC in the intake-stroke cylinder 12D, a compression pressure is reduced to allow the piston to readily pass through the TDC. Further, after the piston passes through the TDC, combustion energy is produced to generate a torque in the normal rotational direction of the crankshaft.

While the engine restart control may be shifted to a normal engine control after Step S144, an additional control for suppressing engine speed surging is performed in this embodiment. The term "engine speed surging" herein means a phenomenon that an engine speed is increased excessively and rapidly after the first combustion in the intake-stroke cylinder 12D, and undesirably causes acceleration shock and driver's uncomfortable feel. The intake pressure (pressure on the downstream side of the throttle valve) is approximately equal to atmosphere pressure during the automatic stop period, and thereby combustion energy in each of the cylinders 12A to 12D just after engine start (after the first combustion in the intake-stroke cylinder 12D) temporarily becomes greater than that in normal idling to cause the engine speed surging. In this embodiment, the following Steps S145 to S159 are performed to suppress the engine speed surging.

Firstly, the target output current of the alternator 28 is set at a value slightly greater than a normal value, and activated to generate power (Step S145). This power generation of the alternator provides an increased rotational resistance in the crankshaft 3 (external load of the engine) to suppress engine speed surging.

Then, it is determined whether the intake pressure detected by the intake pressure sensor 26 is greater than that during a normal idling without the automatic engine stop control (Step S150). If the determination in Step S150 is YES, or the current condition is liable to cause engine speed surging, the opening of the throttle valve 23 will be reduced to be less than that during the normal idling (Step S151) to suppress the amount of combustion energy to be produced.

Then, it is determined whether the exhaust gas purification catalyst in the exhaust passage 22 has a temperature equal to or less than an activation temperature thereof (Step S152). When the determination in Step S152 is YES, the target air-fuel ratio for the cylinders is set at a rich value or λ = 1 (Step S153), and the ignition timing is delayed to be a TDC or later (Step S154). This makes it possible to facilitate temperature rise or warming-up in the catalyst. In addition, the amount of combustion energy to be produced can be further suppresses by the delayed ignition timing.

If the determination in Step S152 is made as NO or it is determined that the exhaust gas purification catalyst has a temperature greater than the activation temperature, the target air-fuel ratio for the cylinders is set at a lean value or λ > 1 and in a stratified lean combustion mode (Step S158). This lean combustion makes it possible to achieve reduced fuel consumption and suppress the amount of combustion energy to be produced.

The process returns to Step S150 through Step S154 or S158, and the above control process will be repeated until the determination in Step 150 is made as NO or it is determined that the intake pressure is greater than that during a normal idling without the automatic engine stop control. The determination of NO in Step 150 means that the risk of occurrence of engine speed surging is eliminated. Thus, the engine restart control includiding the output current value of the alternator 28 is shifted to a normal engine control (Step S160).

According to the above restart control, as shown in FIGS. 15 and 16, the primary fuel injection J3 is firstly performed in the compression-stroke cylinder 12C (cylinder #3), and the resulting air-fuel mixture is ignited to induce combustion [(1) in FIG. 15]. The piston 13 of the compression-stroke cylinder 12C is pushed down toward the BDC by a combustion pressure [range "a" in FIG. 16] arising from this combustion (1) pushes, and thereby the engine crankshaft is driven in the reverse rotation direction. This primary fuel injection J3 to the compression-stroke cylinder 12C is performed to selectively form an air-fuel mixture with a lean air-fuel ratio (λ > 1) if the air quantity is relatively large, or with a theoretical or richer air-fuel ratio (λ = 1) if the air quantity is relatively small. This makes it possible to obtain adequate combustion energy for reverse rotation of the engine crankshaft, or combustion energy to the extent capable of sufficiently compressing air in the expansion-stroke cylinder 12A without an excessive reverse rotation or moving the piston of the expansion-stroke cylinder 12A beyond the compression TDC.

In conjunction with initiation of the reverse rotation in the engine crankshaft, the piston 13 of the expansion-stroke cylinder 12A (cylinder #1) starts being moved toward the TDC. Just after the movement, the first (initial) fuel injection J1 is performed in the expansion-stroke cylinder 12A, and the injected fuel starts being vaporized. Then, when the piston 13 of the expansion-stroke cylinder 12A is moved to a position on the side of the TDC (preferably on the side of the TDC relative to the stroke midpoint), and air in the cylinder 12A is compressed, the second (last) fuel injection J2 is performed. Latent heat of vaporization of this injected fuel provides a reduced compression pressure to allow the piston 13 to be moved closer to the TDC, so that the density of the compressed air (air-fuel mixture) is increased [range "b" in FIG. 16].

When the piston 13 of the expansion-stroke cylinder 12A is moved sufficiently close to the TDC, the air-fuel mixture in the cylinder 12A is ignited to induce combustion of the sufficiently vaporized fuel from the first fuel injection (J1) and the second fuel injection (J2) [(2) in FIG. 15], and the engine crankshaft is driven in the normal rotation direction by the resulting combustion pressure [region "c" in FIG. 16].

Further, the secondary fuel injection (J4) is performed in the compression-stroke cylinder 12C at an appropriate injection timing to form an air-fuel mixture with a richer air-fuel ratio than a combustible air-fuel ratio [(3) in FIG. 15]. While this injected fuel is not burnt in the compression-stroke cylinder 12C, a compression pressure in the compression-stroke cylinder 12C is reduced by latent heat of vaporization of the injected fuel [region "d" in FIG. 16]. This makes it possible to reduce a part of the first combustion energy in the expansion-stroke cylinder 12A to be consumed as the energy required for the piston of the compression-stroke cylinder to pass through the compression TDC (first compression TDC after initiation of the restart control).

Furthermore, the fuel injection timing in the fuel injection (J5) for the intake-stroke cylinder 12D or the cylinder having combustion subsequent to the first combustion is set at an adequate timing [e.g. after the intermediate phase of the compression stroke in the cylinder 12D, as shown in FIG. 15] for allowing latent heat of vaporization of the injected fuel to reduce the in-cylinder temperature and compression pressure. This prevents the occurrence of self-ignition before the compression TDC during the compression stroke of the intake-stroke cylinder 12D. In addition, the ignition timing in the intake-stroke cylinder 12D is set at the combustion TDC or later [region "e" in FIG. 16] to prevent combustion before the combustion TDC. That is, the reduced compression pressure by the fuel injection (J5) and no combustion before the compression TDC makes it possible to reduce a part of the first combustion energy in the expansion-stroke cylinder 12A to be consumed as the energy required for the piston of the intake-stroke cylinder to pass through the compression TDC (second compression TDC after initiation of the restart control).

In this manner, energy of the first combustion [(2) in FIG. 15] in the expansion-stroke cylinder 12A allows the respective pistons of the compression-stroke and intake-stroke cylinders to pass through or be moved beyond the first compression TDC [(3) in FIG. 15] and the second compression TDC [(4) in FIG. 15] so as to assure a smooth and reliable restart performance. In the subsequent combustion cycle [(5), (6), ---- in FIG. 15], the restart control will be shifted to a normal engine control while preventing the occurrence of surging, for example, by setting the air-fuel ratio at a lean air-fuel ratio (λ > 1) and/or delaying the ignition timing, depending on the catalyst temperature.

As mentioned above, in the engine starting system according to the aforementioned embodiment of the present invention, the engine includes: the fuel injection control means (included in the ECU 2 in the embodiment) for controlling a fuel injection amount and a fuel injection timing in each of the plurality of fuel injection valves 16 adapted to inject fuel directly into the corresponding plurality of cylinders 12A to 12D; the ignition control means (included in the ECU 2 in the embodiment) for controlling each ignition timing of the plurality of spark plugs 15 provided in the corresponding cylinders 12A to 12d; the alternator 28 designed to be driven by the engine and operable to allow an output current therefrom to be the predetermined target output current Ge; and the rotational speed detecting means (the crank angle sensors 30, 31 having a function of a rotational speed sensor) for detecting an engine speed Ne. The engine starting system includes: the automatic stop control means (included in the ECU 2 as the automatic stop control section in the embodiment) operable, upon satisfaction of a predetermined automatic engine stop condition, to control the fuel injection valves 16 to interrupt the fuel injection for maintaining an operating state of the engine, so as to automatically stop the engine; and the automatic engine start control means (included in the ECU 2 as the automatic start control section in the embodiment) operable, upon satisfaction of a restart condition for restarting the automatically stopped engine, to allow the fuel injection valve 16 of at least the cylinder in the state after being automatically stopped in the expansion stroke 12A, to inject fuel into the cylinder, and allow the spark plug 15 of the cylinder to ignite an air-fuel mixture and induce combustion in the cylinder, so as to automatically restart the engine. In this engine starting system, the automatic stop control means is operable, during the automatic engine stop control [for example, at Time t2 when the engine speed Ne is greater than a normal idling speed (e.g. 650 rpm), shortly after Time t1 when the fuel injection is interrupted, as in the embodiment, or around Time t2], to set the target output current Ge of the alternator 28 at a predetermined relatively large initial value and then [for example, at Time t3 when the lowering rate of the engine speed Ne after the interruption of the fuel injection can be adequately detected, and the engine speed is in a given range allowing the power generation function of the alternator 28 to be sufficiently activated, as in the embodiment, or around Time t3] determine a decrement from the initial value of the target output current depending on the level of lowering in engine speed occurring after the interruption of the fuel injection. Thus, a control for adjusting the rotational resistance of the crankshaft 3 can be quickly performed with a high degree of accuracy, so that the piston 13 of the cylinder 12A to be in an expansion stroke after stop of the engine can be further reliably stopped at a position falling within an adequate range R for restart of the engine.

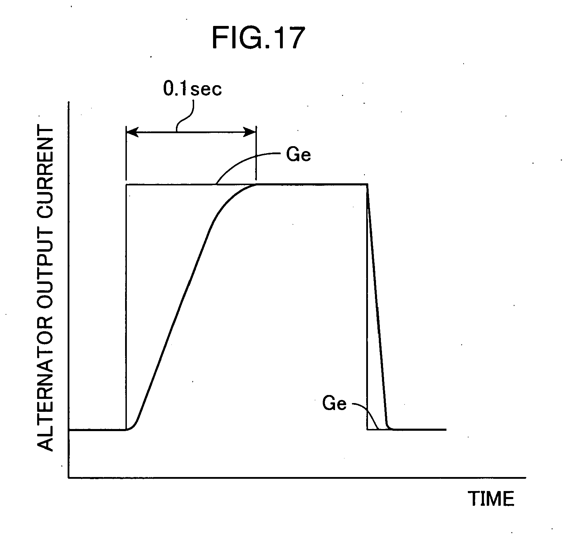

Specifically, in the alternator 28, the target output current Ge can be adjusted at an arbitrary value ranging, for example, from about 0 (zero) to 60 A, to accurately adjust the rotational resistance of the crankshaft 3 over a wide range. In fact, as shown in FIG. 17, it is known that, while about 0.1 sec is required for an output current to rise up to a target output current Ge after it is changed from a small value, such as about 10 A, to a large value, such as about 60 A, an output current can instantaneously reach a target output current Ge when the target output current Ge of the alternator 28 is changed from a large value, such as about 60 A, to a small value, such as about 10 A.

Thus, in the initial stage of the engine stop control, the target output current Ge of the alternator 28 is set at a given relatively large value (initial value) to allow the power gestation function of the alternator 28 to be sufficiently achieved. Then, a time when the level of, lowering in TDC engine speed ne or an engine speed when the piston 12 passes through a compression TDC can be adequately detected, and the engine speed Ne is in a given range allowing the power generation function of the alternator 28 to be sufficiently activated, a decrement from the initial value of the target output current Ge is determined depending on the lowering level or rate of the TDC engine speed. This allows the control for adjusting the crankshaft to be quickly executed with a high degree of accuracy depending on the level of lowering in engine speed Ne, so that the piston 13 of the cylinder 12A to be in an expansion stroke after stop of the engine can be further reliably stopped at a position falling within an adequate range R for restart of the engine.

In place of the above embodiment designed a TDC engine speed ne when the piston 12 passes through a compression TDC, and control a decrement of the target output current Ge in accordance with the detected TDC engine speed ne, according to the invention a crank angle, for example, at a time when the piston 13 passes through a stroke midpoint, is used as a detection reference angle, and a decrement of the target output current Ge is determined in accordance with the engine speed Ne at a time when the reference angle is detected. However, the engine speed Ne is significantly varied at the time when the piston 13 passes through a stroke midpoint, which is likely to cause difficulties in accurately discriminate the lowering level of the engine speed Ne. Therefore, it is desirable to determine a decrement of the target output current Ge of the alternator 28 in accordance with the TDC engine speed ne or an engine speed when the piston 12 passes through a compression TDC where the TDC engine speed ne temporarily becomes stable.

According to the above embodiment, during the automatic engine stop control, after the lapse of a given time from the interruption of fuel injection at the time when the engine speed Ne is equal to the predetermined reference speed N2, a TDC engine speed ne is detected at Time t3 when it is determined that the piston 13 of any one of the cylinders reaches any one of the fourth to sixth compression TDCs to the last compression TDC in the cylinders just before stop of the engine. Further, a value of target output current Ge corresponding to the detected TDC engine speed ne is read from the map illustrated in FIG. 11 to determine a decrement of the target output current Ge of the alternator 28 in such a manner that the decrement is set at a larger value when the detected TDC engine speed ne has a smaller value. Thus, the target output current Ge of the alternator 28 can be adequately controlled to lower the engine speed Ne along the predetermined reference curve. In this manner, based on the TDC engine speed ne in the fourth compression TDC to the last compression TDC just before stop of the engine, the target output current Ge of the alternator 28 is adjusted to allow the TDC engine speed ne the second in the second compression TDC to the last compression TDC just before stop of the engine, to fall within the range indicated by the hatched lines in FIG. 6, to change the rotational resistance of the engine crankshaft so that

In order to stop the piston 13 of the cylinder to be in an expansion stroke after stop of the engine, at an adequate position for restart of the engine, it is desirable to perform the process for controlling output current of the of the alternator 28 to adjust the rotational resistance of the crankshaft 3, just before stop of the engine. However, in the state just before stop of the engine, the power generation function of the alternator 28 is not sufficiently activated due to lowering in engine speed Ne, and consequently the rotational resistance of the crankshaft cannot be effectively changed even if the target output current Ge is changed, which leads to difficulties in accurately adjusting the level of lowering in engine speed Ne. Thus, in order to stop the piston 13 of the cylinder 12A to be in an expansion stroke after stop of the engine, at the adequate position, it is desirable to execute the control of increasing the target output current Ge of the alternator 28 up to the initial value after the interruption of the fuel injection, and reducing the target output current Ge of the alternator 28 to a value corresponding to the level of lowering in engine speed in the intermediate stage (at the time when any one of the cylinders reaches any one of the fourth to sixth compression TDCs to the least compression TDC in the cylinders just before stop of the engine) in the course where the engine speed Ne is being lowered.

According to the above embodiment, in the initial stage of the automatic engine stop control, the opening K of the throttle valve 23 is set at about 30 % to ensure an intake-air flow rate to be introduced into the cylinders 12A to 12D, and the target output current Ge of the alternator 28 is increased up to the predetermined initial value at an appropriate time. According to this process, in a region where the engine speed Ne is relatively high in the initial stage of the automatic engine stop control, an intake restriction rate is reduced to introduce a sufficient amount of intake air into the cylinders 12A to 12D so as to effectively achieve an enhanced scavenging performance in the cylinders 12A to 12D and a reduced pumping loss, and then the power generation function of the alternator 28 is activated quickly and sufficiently to adequately adjust the rotational resistance of the crankshaft 3. Thus, this process has an advantage of being able to further reliably execute the control for stopping the piston 13 of the cylinder to be in an expansion stroke after stop of the engine, at the adequate position for restart of the engine.

Particularly, according to the above embodiment, in the region where the engine speed Ne is relatively high in the initial stage of the automatic engine stop control, an intake restriction rate is reduced to ensure an intake-air flow rate to be introduced into the cylinders 12A to 12D, and simultaneously the target output current Ge of the alternator 28 is temporarily reduced, for example, by setting it to 0 (zero). This makes it possible to effectively provide an enhanced scavenging performance in the cylinders 12A to 12D and achieve reduction in both rotational resistance of the crankshaft 3 and pumping loss. Thus, in the initial stage of the automatic engine stop control, this process has an advantage of being able to prevent the engine speed from being significantly lowered and then increase the target output current Ge of the alternator 28 at a given time to the initial value to activate the power generation function of the alternator 28 quickly and sufficiently so as to adjust the external load of the engine at an adequate value.

According to the above embodiment, in the initial stage of the automatic engine stop control, specifically, at Time t2 when the engine speed Ne is lowered to a value less than the predetermined reference speed N2, e.g. about 760 rpm, after the interruption of the fuel injection, the automatic stop control means is operable to execute the control of reducing the opening K of the throttle valve 23 to provide a reduced intake-air flow rate, and increasing the target output current Ge of the alternator 28 up to the initial value. The control of closing the throttle valve at the appropriate time makes it possible to adjust an air quantity to be introduced into the cylinder 12 A to be in an expansion stroke after stop of the engine, in such a manner that it becomes greater than that to be introduced into the cylinder 12C to be in an compression stroke after stop of the engine. Further, the control of effectively activating the power generation function at the appropriate time makes it possible to stop the expansion-stroke cylinder at a position falling within the adequate range R for restart of the engine, or at a position slightly close to the BDC relative to the stroke midpoint.

According to the above embodiment, in the initial stage of the automatic engine stop control, the operation state of the automatic transmission is set in a neutral state to suppress the fluctuation in engine speed Ne due to disturbances or external load, and then the fuel injection is interrupted to lower the engine speed Ne. This process has an advantage of being able to reliably execute the automatic engine stop control for stopping each piston 13 at the adequate position for restart of the engine.

According to the above embodiment, when an normal idling speed without the automatic engine stop control in the engine is set, for example, at 650 rpm (operation state of the automatic transmission: drive state), the fuel injection is interrupted at Time t2 when the engine speed is lowered to the target engine speed (operation state of the automatic transmission: neutral state) N1 set at a vale greater than the normal idling speed, e.g. about 860 rpm. Thus, a sufficient number of rotations (the number of intake, compression, expansion and exhaust strokes) in the engine can be obtained during the period between Time t1, or the interruption of the fuel injection, and the stop of the engine. This process has an advantage of being able to reliably execute the automatic engine stop control of lowering the engine speed Ne along the predetermined reference curve, and controlling the target output current Ge of the alternator 28 during the course of lowering of the engine speed Ne to adjust the rotational resistance of the crankshaft 3 so as to stop each piston 13 at a position falling within the adequate range R for restart of the engine.

According to the above embodiment, at Time t0 when the automatic engine stop condition is satisfied, the target engine speed N1 is set at a value greater than the normal idling speed to perform a feedback control of the engine speed Ne, and the intake-air flow-rate adjusting means consisting of the throttle valve 23 is controlled to allow the intake pressure Bt to have a constant value, so as to provide a stabile engine operating state. Then, the fuel injection is interrupted under the stabile engine operating state. This makes it possible to further reliably execute the automatic engine stop control for lowering the engine speed Ne along the predetermined reference curve.

According to the above embodiment, based on the TDC engine speed ne1 at Time 5 when any one of the piston reaches the last compression TDC, it is determined whether the piston 13 is likely to be stopped at a position on the side of the last half of the compression stroke. Then, the opening K of the throttle opening 23 is adjusted according to the determination. This makes it possible to execute the automatic engine stop control for adequately adjusting the stroke or moving distance of the piston 13 just before stop of the engine so as to stop the piston 13 at a position falling within the adequate range R for restart of the engine.

For example, the determination of whether the piston 13 is likely to be stopped at a position on the side of the last half of the compression stroke is made based on whether the conditions that the least TDC engine speed ne1 is 200 rpm or more, and the boost pressure Bt is equal to or less than the given pressure P2 = - 200 mmHg, are satisfied. Then, if the determination is made as NO, the opening K of the throttle valve 23 will be set at the predetermined first opening of about 40 % to reduce the intake resistance in the intake-stroke cylinder 12D, so as to effectively prevent the piston 13 of the expansion-stroke cylinder 12A to be moved beyond the lower limit of the adequate range R. When the determination is made as YES, the opening K of the throttle valve 23 will be set at the predetermined second opening of about 5 % to generate an appropriate intake resistance in the intake-stroke cylinder 12D, so as to advantageously prevent the piston 13 of the expansion-stroke cylinder 12A to be moved beyond the adequate range R and stopped at a position closer to the stroke end.

While the present invention has been described in connection with the specific embodiment where the intake-air flow rate to each of the cylinders 12A to 12D is adjusted using the intake-air flow-rate adjusting means consisting of the throttle valve 23 disposed on the upstream side of the surge tank 21b, the intake-air flow-rate adjusting means is not limited to such a throttle valve, but any other suitable device capable of adjusting the intake-air flow rate to each of the cylinders 12A to 12D, for example, a conventional variable valve operating mechanism capable of selectively changing the valve lift amount of at least one of the intake valves 10 in each of the cylinders 12A to 12D, or a multi-type throttle valve having a plurality of valve bodies each disposed in a corresponding one of the intake manifold passages 21a in fluid communication with the corresponding cylinders 12A to 12d, may be used.

Further, in the above embodiment, at Time t2 when the engine speed Ne is lowered to a value less than the predetermined reference speed N2 of about 760 rpm after the interruption of the fuel injection, the two operations for reducing the opening K of the throttle valve 23 and increasing the target output current Ge of the alternator 28 are simultaneously performed. However, it is not essentially to exactly synchronize these operations with one another, but it may be controlled such that the operation of increasing the target output current Ge of the alternator 28 starts slightly before or after Time t2 when the opening K of the throttle valve 23 is reduced.

Further, in the engine starting system according to the above embodiment, during the engine restart control for restarting the automatically stopped engine, the primary combustion is induced in the compression-stroke cylinder 12C to slightly move the crankshaft 3 in the reverse rotation direction so as to compress an air-fuel mixture in the expansion-stroke cylinder 12A. Then, the compressed air-fuel mixture is ignited. However, the engine starting system of the present invention is not limited to such a process, but an air-fuel mixture in the expansion-stroke cylinder 12A may be initially ignited to restart the engine.

Further, while the fuel injection for the first combustion in the expansion-stroke cylinder 12A in the above embodiment is performed by the split fuel injection (J1 + J2), this fuel injection may be performed by a single fuel injection designed to inject fuel at a given single fuel injection timing which is determined by experimental tests or the like to substantially achieve both the reduction in compression pressure based on latent heat of vaporization and the securement of a vaporization performance. Further, the split fuel injection for the first combustion in the expansion-stroke cylinder 12A may be split in three or more according to need.

Further, the engine start control may be designed, but omitted in the above embodiment, to execute a starter-assisted restart operation when a given restart condition is satisfied, for example, in cases where the piston stop position is not in the adequate range R, or the engine speed is not increased up to a given value after the initiation of the engine start control.

### INDUSTRIAL APPLICABILITY

As is clear from the above description, the present invention provides the stopping and starting system for automatically stopping and starting an engine of a vehicle according to claim 1, wherein the engine includes: the fuel injection control means for controlling a fuel injection amount and a fuel injection timing in each of a plurality of fuel injection valves adapted to inject fuel directly into a corresponding plurality of cylinders; the ignition control means for controlling each ignition timing of a plurality of spark plugs provided in the corresponding cylinders; the alternator designed to be driven by the engine and operable to allow an output current therefrom to be a predetermined target output current; and the rotational speed detecting means for detecting an engine speed. The engine starting system comprises: the automatic stop control means operable, upon satisfaction of a predetermined automatic engine stop condition, to control the fuel injection valves to interrupt the fuel injection for maintaining an operating state of the engine, so as to automatically stop the engine; and the automatic engine start control means operable, upon satisfaction of a restart condition for restarting the automatically stopped engine, to allow the fuel injection valve of at least the cylinder in the state after being automatically stopped in an expansion stroke, to inject fuel into the cylinder, and allow the spark plug of the cylinder to ignite an air-fuel mixture and induce combustion in the cylinder, so as to automatically restart the engine. In the engine starting system, the automatic stop control means is operable, during the automatic engine stop control, to set the target output current of the alternator at a predetermined relatively large initial value and then determine a decrement from the initial value of the target output current depending on the level of lowering in engine speed occurring after the interruption of the fuel injection. Thus, the engine starting system of the present invention can quickly execute the control for adjusting the rotational resistance of the crankshaft depending on the level of lowering in engine speed, with a high degree of accuracy.

## Claims

1. An engine stopping and starting system for automatically stopping and starting an engine of a vehicle, said engine including:
fuel injection control means (2) for controlling a fuel injection amount and a fuel injection timing in each of a plurality of fuel injection valves (16) adapted to inject fuel directly into a corresponding plurality of cylinders (12A-12D);
ignition control means (2) for controlling each ignition timing of a plurality of spark plugs (15) provided in the corresponding cylinders (12A-12D);
an alternator (28) designed to be driven by the engine and operable to allow an output current therefrom to be a predetermined target output current;
rotational speed detecting means (30, 31) for detecting an engine speed; and
intake-air flow-rate adjusting means (23) for adjusting an intake-air flow rate to be supplied to each of the cylinders (12A-12D),
said engine stopping/starting system being **characterized by** comprising:
automatic stop control means (2) operable, upon satisfaction of a predetermined automatic engine stop condition, to control said fuel injection valves (16) to interrupt the fuel injection for maintaining an operating state of the engine, so as to automatically stop the engine; and
automatic engine start control means (2) operable, upon satisfaction of a restart condition for restarting said automatically stopped engine, to allow the fuel injection valve (16) of at least the cylinder in the state after being automatically stopped in an expansion stroke, to inject fuel into said cylinder, and allow the spark plug (15) of said cylinder to ignite an air-fuel mixture and induce combustion in said cylinder, so as to automatically restart said engine,
wherein said automatic stop control means (2) is operable, during said automatic engine stop control, to allow said intake-air flow-rate adjusting means (23) to increase the intake-air flow rate to be supplied to each of the cylinders (12A-12D) when the fuel injection is interrupted, then allow said alternator (28) to increase said target output current to a predetermined initial value, and then reduce said target output current of said alternator (28) to a value less than said initial value depending on the level of lowering in engine speed occurring after the interruption of said fuel injection, and
said automatic stop control means (2) is operable, after the increase of said target output current to said initial value, to determine a decrement from said initial value of said target output current in accordance with an engine speed detected by said rotational speed detecting means (30, 31) at a time when an engine crank angle becomes equal to a predetermined detection angle, wherein said decrement is set at a larger value when said detected engine speed has a smaller value.

2. The engine stopping and starting system as defined in claim 1, wherein said automatic stop control means (2) is operable to set an engine speed at a value greater than a normal idling speed in conjunction with executing the interruption of the fuel injection from said fuel injection valves (16) to automatically stop the engine, wherein said automatic stop control means (2) is operable to set the target output current of said alternator (28) at said initial value when an engine speed detected by said engine speed detecting means (30, 31) after the interruption of the fuel injection is greater than said normal idling speed, and determine a decrement from said initial value of said target output current, after an engine speed detected by said engine speed detecting means (30, 31) becomes equal to or less than said normal idling speed.

3. The engine stopping and starting system as defined in claim 1, wherein said automatic stop control means (2) is operable, after a piston (13) of any one of said cylinders (12A-12D) passes through the top dead center in the second compression stroke to the last compression stroke in said cylinders (12A-12D) just before the engine is stopped, to allow the fuel injection valve (16) for the cylinder which reaches a subsequent compression stroke, to execute the fuel injection in the last half of said subsequent compression stroke.

4. The engine stopping and starting system as defined in claim 3, wherein said automatic stop control means (2) is operable to set a fuel injection amount to be injected from said fuel injection valve (16) in the last half of said subsequent compression stroke, in accordance with an engine speed at a bottom dead center detected by said rotational speed detecting means (30, 31) at the time when the piston (13) of any one of said cylinders (12A-12D) passes through the top dead center in the second compression stroke to the last compression stroke in said cylinders (12A-12D) just before the engine is stopped, wherein said fuel injection amount is set at a larger value as said detected engine speed has a larger value.

5. The engine stopping and starting system as defined in claim 2, wherein said vehicle includes an automatic transmission, and wherein said automatic stop control means (2) is operable, upon satisfaction of said automatic stop condition, to switch an operation state of said automatic transmission from a drive state to a neutral state, and allow said intake-air flow-rate adjusting means (23) to increase the intake-air flow rate to be supplied to each of the cylinders (12A-12D) up to a value greater than that in an engine operating state at said normal idling speed, whereafter said automatic stop control means (2) is operable, when an engine speed is increased up to a value greater than said normal idling speed, to interrupt the fuel injection from said fuel injection valves (16) and set said initial value as said target output current.

## Patentansprüche

1. Motor-Start/Stopp-System zum automatischen Stoppen und Starten eines Motors eines Fahrzeugs, wobei der Motor aufweist:
eine Kraftstoffeinspritzsteuerungseinrichtung (2) zur Steuerung einer Kraftstoffeinspritzmenge und eines Kraftstoffeinspritzzeitpunkts in jedes von einer Vielzahl von Kraftstoffeinspritzventilen (16), die geeignet sind, um Kraftstoff direkt in eine entsprechende Vielzahl von Zylindern (12A-12D) einzuspritzen;
eine Zündsteuerungseinrichtung (2) zur Steuerung jedes Zündzeitpunkts einer Vielzahl von Zündkerzen (15), die in den entsprechenden Zylindern (12A-12D) vorgesehen sind;
eine Lichtmaschine (28), die ausgelegt ist, um von dem Motor angetrieben zu werden und betreibbar ist, um zu ermöglichen, dass ein Ausgangsstrom hiervon ein vorgegebener Zielausgangsstrom ist;
eine Drehzahlerfassungseinrichtung (30, 31) zum Erfassen einer Motordrehzahl; und
eine Ansaugluftströmungsrate-Einstelleinrichtung (23) zum Einstellen einer Ansaugluftströmungsmenge, die jedem der Zylinder (12A-12D) zugeführt werden soll,
wobei das Motor-Stopp/Start-System **dadurch gekennzeichnet ist, dass** es aufweist:
eine automatische Stoppsteuerungseinrichtung (2), die betreibbar ist, um bei Erfüllung einer vorgegebenen automatischen Motor-Stopp-Bedingung, die Kraftstoffeinspritzventile (16) zu steuern, die Kraftstoffeinspritzung zum Aufrechterhalten eines Betriebszustands des Motors zu unterbrechen, um den Motor automatisch zu stoppen; und
eine automatische Startsteuerungseinrichtung (2), die betreibbar ist, um bei Erfüllung einer Neustart-Bedingung zum Neustarten des automatisch gestoppten Motors, es dem Kraftstoffeinspritzventil (16) zumindest des Zylinders in dem Zustand nach dem automatischen Stoppen in einem Expansionshub zu ermöglichen, Kraftstoff in den Zylinder einzuspritzen und es der Zündkerze (15) des Zylinders zu ermöglichen, ein Luft-Kraftstoff-Gemisch zu entzünden und eine Verbrennung in dem Zylinder auszulösen, um den Motor automatisch neu zu starten,
wobei die automatische Stoppsteuerungseinrichtung (2) während der automatischen Motor-Stopp-Steuerung betreibbar ist, es der Ansaugluftströmungsrate-Einstelleinrichtung (23) zu ermöglichen, die zu jedem der Zylinder (12A-12D) zuzuführende Ansaugluftströmungsrate zu erhöhen, wenn die Kraftstoffeinspritzung unterbrochen ist, dann der Lichtmaschine (28) zu ermöglichen, den Zielausgangsstrom auf einen vorgegebenen Ausgangswert zu erhöhen und dann den Zielausgangsstrom der Lichtmaschine (28) auf einen Wert zu verringern, der kleiner als der Ausgangswert ist, abhängig von dem Grad der Motordrehzahlabsenkung, der nach der Unterbrechung der Krafteinspritzung auftritt, und
die automatische Stoppsteuerungseinrichtung (2) betreibbar ist, nach dem Erhöhen des Zielausgangsstroms auf den Ausgangswert, eine Abnahme von dem Ausgangswert des Zielausgangsstroms in Übereinstimmung mit einer Motordrehzahl zu bestimmen, die durch die Drehzahlerfassungseinrichtung (30, 31) zu einem Zeitpunkt erfasst wird, wenn ein Motor-Kurbelwellenwinkel gleich einem vorgegebenen Erfassungswinkel wird, wobei die Abnahme auf einen größeren Wert eingestellt wird, wenn die erfasste Motordrehzahl einen kleineren Wert aufweist.

2. Motor-Start/Stopp-System nach Anspruch 1, wobei die automatische Stoppsteuerungseinrichtung (2) betreibbar ist, um eine Motordrehzahl auf einen Wert größer als eine normale Leerlaufdrehzahl in Verbindung mit dem Ausführen der Unterbrechung der Kraftstoffeinspritzung von den Kraftstoffeinspritzventilen (16) einzustellen, um den Motor automatisch zu stoppen, wobei die automatische Stoppsteuerungseinrichtung (2) betreibbar ist, um den Zielausgangsstrom der Lichtmaschine (28) auf den Ausgangswert einzustellen, wenn eine Motordrehzahl, erfasst durch die Drehzahlerfassungseinrichtung (30, 31) nach der Unterbrechung der Kraftstoffeinspritzung, größer als die normale Leerlaufdrehzahl ist, und um eine Abnahme des Ausgangswerts des Zielausgangsstroms zu bestimmen, nachdem eine von der Drehzahlerfassungseinrichtung (30, 31) erfasste Motordrehzahl gleich oder kleiner als die normale Leerlaufdrehzahl wird.

3. Motor-Start/Stopp-System nach Anspruch 1, wobei die automatische Stoppsteuerungseinrichtung (2) betreibbar ist, nachdem ein Kolben (13) eines der Zylinder (12A-12D) den oberen Totpunkt in dem zweiten Kompressionshub bis zum letzten Kompressionshub in den Zylindern (12A-12D) durchläuft, kurz bevor der Motor gestoppt wird, um das Kraftstoffeinspritzventil (16) für den Zylinder, welcher einen nachfolgenden Kompressionshub erreicht, die Kraftstoffeinspritzung in der letzten Hälfte des nachfolgenden Kompressionshubs ausführen zu lassen.

4. Motor-Start/Stopp-System nach Anspruch 3, wobei die automatische Stoppsteuerungseinrichtung (2) betreibbar ist, um eine aus dem Kraftstoffeinspritzventil (16) in der letzten Hälfte des nachfolgenden Kompressionshubs einzuspritzende Kraftstoffeinspritzmenge einzustellen, in Übereinstimmung mit einer Motordrehzahl an einem unteren Totpunkt, die durch die Drehzahlerfassungseinrichtung (30, 31) zu einem Zeitpunkt erfasst wird, wenn der Kolben (13) eines der Zylinder (12A-12D) den oberen Totpunkt in dem zweiten Kompressionshub bis zum letzten Kompressionshub in den Zylindern (12A-12D) durchläuft, kurz bevor der Motor gestoppt wird, wobei die Kraftstoffeinspritzmenge auf einen größeren Wert eingestellt wird, wenn die erfasste Motordrehzahl einen größeren Wert aufweist.

5. Motor-Start/Stopp-System nach Anspruch 2, wobei das Fahrzeug ein Automatikgetriebe aufweist und wobei die automatische Stoppsteuerungseinrichtung (2) bei Erfüllung der automatischen Stoppbedingung betreibbar ist, um einen Betriebszustand des Automatikgetriebes von einem Antriebszustand in einen Neutralzustand umzuschalten und es der Ansaugluftströmungsrate-Einstelleinrichtung (23) zu ermöglichen, die Ansaugluftströmungsrate, die jedem der Zylinder (12A-12D) zugeführt werden soll, auf einen Wert größer als der in einem Motorbetriebszustand bei der normalen Leerlaufdrehzahl zu erhöhen, woraufhin die automatische Stoppsteuerungseinrichtung (2) betreibbar ist, wenn eine Motordrehzahl auf einen Wert größer als die normale Leerlaufdrehzahl erhöht wird, um die Kraftstoffeinspritzung von den Kraftstoffeinspritzventilen (16) zu unterbrechen und den Ausgangswert als den Zielausgangsstrom einzustellen.

## Revendications

1. Système d'arrêt et de démarrage pour moteur permettant d'arrêter et de démarrer automatiquement un moteur d'un véhicule,
ledit moteur comprenant :
un moyen (2) de commande de l'injection de combustible destiné à commander une quantité d'injection de combustible et un calage de l'injection de combustible dans chaque soupape parmi une pluralité de soupapes (16) d'injection de combustible adaptées à injecter du combustible directement vers une pluralité correspondante de cylindres (12A-12D) ;
un moyen (2) de commande de l'allumage destiné à commander chaque calage de l'allumage d'une pluralité de bougies d'allumage (15) agencées dans les cylindres (12A-12D) correspondants ;
un alternateur (28) conçu pour être entraîné par le moteur et ayant pour fonction de permettre à un courant de sortie de l'alternateur de devenir un courant de sortie cible prédéfini ;
des moyens (30, 31) de détection de la vitesse de rotation destinés à détecter une vitesse du moteur ; et
un moyen (23) de réglage du débit d'air d'admission destiné à régler un débit d'air d'admission à apporter à chaque cylindre (12A-12D),
ledit système d'arrêt/démarrage pour moteur étant **caractérisé en ce qu'**il comprend :
un moyen (2) de commande d'arrêt automatique ayant pour fonction, lors de la satisfaction d'une condition prédéfinie d'arrêt automatique du moteur, de commander lesdites soupapes (16) d'injection de combustible afin d'interrompre l'injection de combustible servant à maintenir un état de fonctionnement du moteur, en vue d'arrêter automatiquement le moteur ; et
un moyen (2) de commande de démarrage automatique du moteur ayant pour fonction, lors de la satisfaction d'une condition de redémarrage dudit moteur arrêté automatiquement, de permettre à la soupape (16) d'injection de combustible d'au moins le cylindre dans l'état postérieur à l'arrêt automatique dans une course d'expansion, d'injecter du combustible audit cylindre, et de permettre à la bougie d'allumage (15) dudit cylindre d'allumer un mélange air-combustible et de provoquer la combustion dans ledit cylindre, afin de redémarrer automatiquement ledit moteur,
ledit moyen (2) de commande d'arrêt automatique ayant pour fonction, pendant ladite commande d'arrêt automatique du moteur, de permettre audit moyen (23) de réglage du débit d'air d'admission d'augmenter le débit d'air d'admission à apporter à chaque cylindre (12A-12D) lorsque l'injection de combustible est interrompue, puis de permettre audit alternateur (28) d'augmenter ledit courant de sortie cible à une valeur initiale prédéfinie, et ensuite de réduire ledit courant de sortie cible dudit alternateur (28) à une valeur inférieure à ladite valeur initiale en fonction du niveau de diminution de la vitesse du moteur survenant après l'interruption de ladite injection de combustible, et
ledit moyen (2) de commande d'arrêt automatique ayant pour fonction, après l'augmentation dudit courant de sortie cible à ladite valeur initiale, de déterminer une diminution par rapport à ladite valeur initiale dudit courant de sortie cible en fonction d'une vitesse du moteur détectée par lesdits moyens (30, 31) de détection de la vitesse de rotation à un moment où un angle du vilebrequin du moteur devient égal à un angle de détection prédéfini, ladite diminution étant réglée à une valeur plus grande lorsque ladite vitesse détectée du moteur présente une valeur plus petite.

2. Le système d'arrêt et de démarrage pour moteur tel que défini dans la revendication 1, dans lequel ledit moyen (2) de commande d'arrêt automatique a pour fonction de régler une vitesse du moteur à une valeur supérieure à une vitesse au ralenti normale conjointement à l'exécution de l'interruption de l'injection de combustible à partir desdites soupapes (16) d'injection de combustible afin d'arrêter automatiquement le moteur, dans lequel ledit moyen (2) de commande d'arrêt automatique a pour fonction de régler le courant de sortie cible dudit alternateur (28) à ladite valeur initiale lorsqu'une vitesse du moteur, détectée par lesdits moyens (30, 31) de détection de la vitesse du moteur après l'interruption de l'injection de combustible, est supérieure à ladite vitesse au ralenti normale, et de déterminer une diminution par rapport à ladite valeur initiale dudit courant de sortie cible, après qu'une vitesse du moteur détectée par lesdits moyens (30, 31) de détection de la vitesse du moteur devient égale ou inférieure à ladite vitesse au ralenti normale.

3. Le système d'arrêt et de démarrage pour moteur tel que défini dans la revendication 1, dans lequel ledit moyen (2) de commande d'arrêt automatique a pour fonction, après le passage d'un piston (13) de l'un quelconque desdits cylindres (12A-12D) à travers le point mort haut pendant la deuxième course de compression jusqu'à la dernière course de compression dans lesdits cylindres (12A-12D) juste avant l'arrêt du moteur, de permettre à la soupape (16) d'injection de combustible, pour le cylindre ayant atteint une course de compression subséquente, d'effectuer l'injection de combustible pendant la dernière moitié de ladite course de compression subséquente.

4. Le système d'arrêt et de démarrage pour moteur tel que défini dans la revendication 3, dans lequel ledit moyen (2) de commande d'arrêt automatique a pour fonction de régler une quantité d'injection de combustible à injecter à partir de ladite soupape (16) d'injection de combustible pendant la dernière moitié de ladite course de compression subséquente, en fonction d'une vitesse du moteur au niveau d'un point mort bas détecté par lesdits moyens (30, 31) de détection de la vitesse de rotation à un moment où le piston (13) de l'un quelconque desdits cylindres (12A-12D) passe à travers le point mort haut pendant la deuxième course de compression jusqu'à la dernière course de compression dans lesdits cylindres (12A-12D) juste avant l'arrêt du moteur, ladite quantité d'injection de combustible étant réglée à une valeur plus grande à mesure que ladite vitesse détectée du moteur présente une valeur plus grande.

5. Le système d'arrêt et de démarrage pour moteur tel que défini dans la revendication 2, dans lequel ledit véhicule comprend une transmission automatique, et dans lequel ledit moyen (2) de commande d'arrêt automatique a pour fonction, lors de la satisfaction de ladite condition d'arrêt automatique, de commuter un état de fonctionnement de ladite transmission automatique d'un état d'entraînement à un état neutre, et de permettre audit moyen (23) de réglage du débit d'air d'admission d'augmenter le débit d'air d'admission à apporter à chaque cylindre (12A-12D) à une valeur supérieure à la valeur dans un état de fonctionnement du moteur à ladite vitesse au ralenti normale, après quoi ledit moyen (2) de commande d'arrêt automatique a pour fonction, lorsqu'une vitesse du moteur est augmentée à une valeur supérieure à ladite vitesse au ralenti normale, d'interrompre l'injection de combustible à partir desdites soupapes (16) d'injection de combustible et de régler ladite valeur initiale en tant que courant de sortie cible.
